(19) Europäisches Patentamt
European Patent Office
Office européen des brevets

(11) **EP 3 647 826 B1**

(12) **EUROPEAN PATENT SPECIFICATION**

(45) Date of publication and mention
of the grant of the patent:
**19.02.2025 Bulletin 2025/08**

(21) Application number: **19817109.2**

(22) Date of filing: **15.08.2019**

(51) International Patent Classification (IPC):
**G01V 3/08** *(2006.01)*        **G01V 3/12** *(2006.01)*
**G01V 8/20** *(2006.01)*        **G01S 13/89** *(2006.01)*
**G01S 7/02** *(2006.01)*

(52) Cooperative Patent Classification (CPC):
**G01V 8/005; G01S 7/03; G01S 13/887;
G01S 13/89; G01V 3/12**

(86) International application number:
**PCT/CN2019/100787**

(87) International publication number:
**WO 2020/035023 (20.02.2020 Gazette 2020/08)**

(54) **MULTIPLE-TRANSMITTING MULTIPLE-RECEIVING ANTENNA ARRAY ARRANGEMENT FOR ACTIVE MILLIMETER WAVE SECURITY INSPECTION IMAGING, AND HUMAN BODY SECURITY INSPECTION DEVICE AND METHOD**

GRUPPENANTENNENANORDNUNG MIT MEHRFACHER SENDUNG UND MEHRFACHEM EMPFANG FÜR AKTIVE MILLIMETERWELLEN-SICHERHEITSINSPEKTIONSBILDGEBUNG SOWIE VERFAHREN UND VORRICHTUNG ZUR SICHERHEITSINSPEKTION DES MENSCHLICHEN KÖRPERS

AGENCEMENT DE RÉSEAU D'ANTENNES À RÉCEPTION MULTIPLE/ÉMISSION MULTIPLE D'IMAGERIE D'INSPECTION DE SÉCURITÉ D'ONDE MILLIMÉTRIQUE ACTIVE, ET DISPOSITIF ET PROCÉDÉ D'INSPECTION DE SÉCURITÉ DE CORPS HUMAIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.08.2018   CN 201810946420
29.12.2018   CN 201811654211
29.12.2018   CN 201811654154
29.12.2018   CN 201811653893**

(43) Date of publication of application:
**06.05.2020   Bulletin 2020/19**

(73) Proprietors:
• **Tsinghua University
Haidian District, Beijing 100084 (CN)**
• **Nuctech Company Limited
TongFang Building
Shuangqinglu
Haidian District
Beijing 100084 (CN)**

(72) Inventors:
• **ZHAO, Ziran
Beijing 100084 (CN)**
• **YOU, Yan
Beijing 100084 (CN)**
• **LUI, Wenguo
Beijing 100084 (CN)**
• **QIAO, Lingbo
Beijing 100084 (CN)**
• **JIN, Yingkang
Beijing 100084 (CN)**
• **MA, Xuming
Beijing 100084 (CN)**
• **WU, Jian
Beijing 100084 (CN)**
• **ZHENG, Zhimin
Beijing 100084 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(56) References cited:
**EP-A1- 3 399 333**     **EP-A2- 2 895 891**
**WO-A1-2011/086543**     **WO-A1-2015/021750**
**WO-A1-2017/113815**     **WO-A1-2018/018401**
**CN-A- 103 197 353**     **CN-A- 104 375 144**
**CN-A- 106 054 181**     **CN-A- 106 054 181**
**CN-A- 106 054 181**     **CN-A- 106 707 275**
**CN-A- 106 872 975**     **CN-A- 109 782 366**
**CN-A- 109 799 545**     **CN-A- 109 799 546**

**CN-U- 203 385 857**     **CN-U- 205 263 309**
**CN-U- 206 209 132**     **CN-U- 206 209 132**
**CN-U- 209 433 032**     **CN-U- 209 433 033**
**US-A- 5 557 283**     **US-A1- 2007 075 889**
**US-A1- 2014 091 965**     **US-A1- 2015 048 964**

• **SHEEN D M ET AL: "THREE-DIMENSIONAL
MILLIMETER-WAVE IMAGING FOR CONCEALED
WEAPON DETECTION", IEEE TRANSACTIONS
ON MICROWAVE THEORY AND TECHNIQUES,
IEEE, USA, vol. 49, no. 9, 1 September 2001
(2001-09-01), pages 1581 - 1592, XP001096609,
ISSN: 0018-9480, DOI: 10.1109/22.942570**

## Description

### FIELD

Embodiments of the present disclosure relate to field of human body security inspection, and particularly to a sparse multiple transmitting and multiple receiving antenna array arrangement for an active millimeter wave security inspection imaging, and a human body security inspection apparatus.

### BACKGROUND

At present, the domestic and foreign anti-terrorism situations are becoming more and more serious. The hidden weapons, knives, explosives, drugs and other dangerous goods carried by terrorists pose a great threat to navigation safety. The human security inspection technology for airports, railway stations and other special occasions has been highly valued by transportation management departments of various countries.

Active millimeter-wave or terahertz wave human imaging technology has been available in the prior art. The working principle of the technology is that the device first radiates millimeter waves to the human body, and then receives millimeter waves scattered by the human body or suspicious objects through the detector, and makes image of the human body through a reconstruction algorithm. However, the amount of calculation is large and an imaging speed is slow. Many antennas for transmitting millimeter waves and detecting millimeter waves are needed, and the apparatus is complicated and difficult to manufacture.

US 2015/048964 A1 discloses a millimeter wave three dimensional holographic scan imaging apparatus and a method for inspecting an object to be inspected using the same.

EP 2 895 891 A2 discloses methods and apparatus for scanning articles, such as footwear, to provide information regarding the contents of the articles.

US 2007/075889 A1 discloses an arrangement of receivers and transmitters used in wideband holographic imaging using a reduced number of physical antenna elements compared to established techniques and systems.

US 5,557,283 A discloses a wideband holographic surveillance system.

CN 106054181 B discloses a method for arranging dimensionally sparse arrays for real-time terahertz imaging.

WO 2018/018401 A1 discloses a portable security inspection device based on millimeter wave imaging.

CN 103197353 A discloses a mechanical scanning and microwave active imaging personnel security screening system.

US 2014/091965 A1 discloses an apparatus for synthetic imaging of an object.

### SUMMARY

The present invention provides a sparse multiple transmitting and multiple receiving antenna array arrangement for an active millimeter wave security inspection imaging, and a human body security inspection apparatus, as defined in the appended set of claims.

### BRIEF DESCRIPTION OF THE DRAWINGS

Figure 1 is a schematic diagram of a one-dimensional single transmitting and single receiving antenna array;

Figure 2 is a schematic diagram of a one-dimensional multiple transmitting and multiple receiving antenna array;

Figure 3 is a schematic working principle diagram of a multiple transmitting and multiple receiving antenna array;

Figure 4 is a schematic diagram of a sparse multiple transmitting and multiple receiving antenna array arrangement according to one embodiment of the present disclosure, wherein a spacing between the transmitting antennas is $4\lambda$;

Figure 5 is a schematic diagram of a sparse multiple transmitting and multiple receiving antenna array arrangement according to one embodiment of the present disclosure, wherein a spacing between the transmitting antennas is $4\lambda$;

Figures 6A and 6B are schematic diagrams of a sparse multiple transmitting and multiple receiving antenna array arrangement according to one embodiment of the present disclosure, wherein a spacing between the transmitting antennas is $3\lambda$;

Figures 7A and 7B are schematic diagrams of a sparse multiple transmitting and multiple receiving antenna array arrangement according to one embodiment of the present disclosure, wherein a spacing between the transmitting antennas is $2\lambda$;

Figures 8A and 8B are schematic diagrams of a sparse multiple transmitting and multiple receiving antenna array arrangement according to one embodiment of the present disclosure, wherein a spacing between the transmitting antennas is 5λ;

Figures 9A and 9B are schematic diagrams of a sparse multiple transmitting and multiple receiving antenna array arrangement according to one embodiment of the present disclosure, wherein the transmitting antennas are divided into a plurality of groups;

Figure 10 is schematic diagram of a sparse multiple transmitting and multiple receiving antenna array arrangement according to one embodiment of the present disclosure;

Figure 11 is a schematic diagram of a sparse multiple transmitting and multiple receiving antenna array arrangement according to one embodiment of the present disclosure;

Figure 12 is a schematic diagram of a human body security inspection apparatus according to one embodiment of the present disclosure;

Figure 13 is a schematic diagram of a human body security inspection apparatus according to one embodiment of the present disclosure;

Figure 14 is a schematic diagram of a human body security inspection apparatus according to one embodiment of the present disclosure;

Figure 15 illustrates an arcuate array in accordance with the present disclosure;

Figure 16 illustrates a relationship between an arc length and a chord length of an arcuate array in accordance with the present disclosure;

Figures 17A and 17B respectively show schematic front view and schematic top view of a sparse multiple transmitting and multiple receiving antenna array arrangement according to one embodiment of the present disclosure;

Figure 18 shows a schematic view of a human body security inspection apparatus in accordance with one embodiment of the present disclosure;

Figure 19 shows a schematic diagram of a human body security inspection apparatus in accordance with one embodiment of the present disclosure;

Figure 20 shows a schematic diagram of a human body security inspection apparatus in accordance with one embodiment of the present disclosure;

Figure 21 shows a schematic diagram of a human body security inspection apparatus in accordance with one embodiment of the present disclosure;

Figure 22 shows a schematic diagram of a human body security inspection apparatus in accordance with one embodiment of the present disclosure; and

Figure 23 shows a schematic diagram of a human body security inspection apparatus in accordance with one embodiment of the present disclosure.


## DETAILED DESCRIPTION

While the present disclosure includes various modifications and alternative forms, the specific embodiments are exemplarily illustrated in the drawings and are described in detail herein. It should be understood, however, that the drawings and the detailed description are not intended to limit the present disclosure to the disclosed specific embodiments, instead of, to cover all modification and alternatives falling within the scope defined in the attached claims. The figures are for illustrative purposes and are therefore not drawn to scale.

The terms "upper", "lower", "left", "right" and the like used in the present specification are not intended to limit absolute orientation of the elements, but to facilitate the understanding of relative positions of the elements in the drawings. The "top" and "bottom" are used to describe orientations of an upper side and a lower side of an object located in an upright direction respectively; "first", "second", etc. are not for order, but to distinguish different parts.

Various embodiments in accordance with the present disclosure are described below with reference to the drawings.

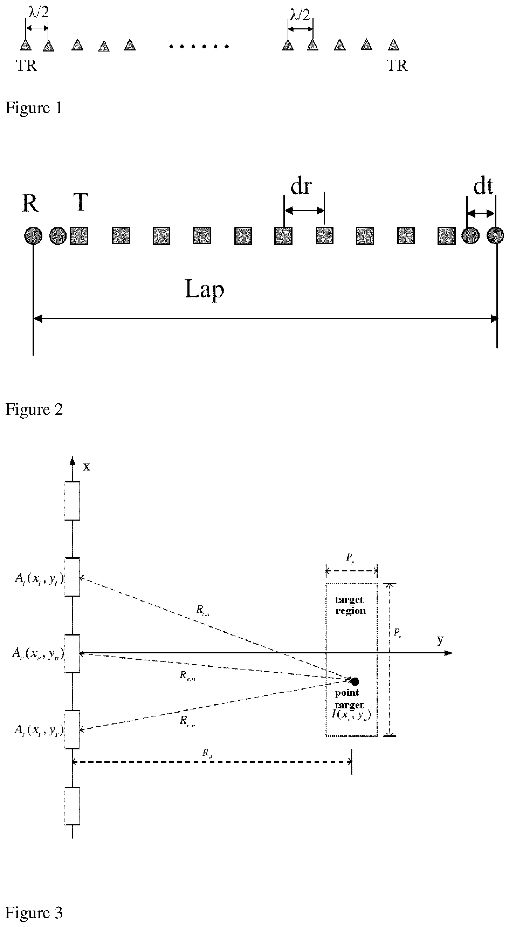

Some basic knowledge of millimeter wave human body security for embodiments of the present disclosure will be described firstly. An active millimeter wave human body security inspection apparatus generally applies the synthetic aperture imaging principle of one-dimensional single-transmitting and single-receiving or quasi single-transmitting and single-receiving antenna array. Referring to Fig. 1, a triangle in Fig. 1 indicates a transmitting and receiving antenna (transmitting-receiving antenna) unit, T indicates a transmitting antenna, R indicates a receiving antenna, and TR indicates a transmitting and receiving antenna unit. Actual transmitting and receiving antenna units are arranged at equal intervals according to a half-wavelength spacing principle in an aperture length direction required for imaging. A rear end (not shown) of a transmitting and receiving antenna unit array is connected to a transceiver device through a high-speed switch. A first transmitting and receiving antenna unit, by combining the switch and the transceiver device, performs a data acquisition, then a second transmitting and receiving antenna unit, by combining the switch and the transceiver device, performs a more data acquisition. By this way, N sets of data acquisitions can be achieved, by switching from the first transmitting and receiving antenna unit to the $N^{th}$ transmitting and receiving antenna unit subsequently by control of the switch and data information of N equivalent units required for imaging can be obtained.

The disadvantage of the one-dimensional array of the antenna units each of which is in form of an integral structure for receiving and transmitting or is configured in separated structures for transmitting and receiving respectively is that a large number of antenna resources are required. In order to realize sampling of N antenna units, N antenna units are required for the array of the antenna units each of which is in form of an integral structure for receiving and transmitting, and 2N antenna units are required for the array of the antenna units each of which is configured in separated structures for transmitting and receiving respectively, which results in a very low utilization of the transmitting and receiving antennas. In addition, since the antenna unit array requires a large number of antenna units, and the interval between the antenna units needs to satisfy a Nyquist adoption theorem, that is, the interval between the antenna units is equal to a half-wavelength interval, which is not difficult to be implemented when an operating frequency is rather low, but will be gradually difficult as the operating frequency is increased.

Nyquist adoption theorem indicates that the number of samplings required along the aperture length direction is determined by several factors, including wavelength, an aperture size, a target size, and a distance to the target. If a phase shift from one sampling point to the next is less than $\pi$, the Nyquist rule is satisfied. The worst case would be that the target is very close to the aperture and the sampling point is close to an edge of the aperture. For a spatial sampling interval $\Delta x$, a phase shift would be no more than $2k\Delta x$ for the worst situation. Therefore, the sampling rule can be expressed as:

$$\Delta x < (\lambda/4)$$

where, a wavelength $\lambda$ is equal to $2\pi/k$.

This result is more rigorous than that in a usual situation because a target (e.g., the human body) is usually closer to the aperture and the antenna beamwidth is typically less than 180 degrees. For this reason, an imaging system used typically employs a sampling interval of the order of magnitude of $\lambda/2$.

For example, the cases of operating frequencies of 24-30 GHz and 70-80 GHz are provided for comparison. The corresponding wavelengths are 10 mm and 4 mm respectively. To realize the one-dimensional array shown in Figure 1, the interval of the transmitting and receiving antennas is required to be 5 mm and 2 mm, respectively. Assuming an antenna aperture length is 1m, the array of the antenna units each of which is in form of an integral structure for receiving and transmitting requires 200 and 500 antenna units, and the array of the antenna units each of which is configured in separated structures for transmitting and receiving respectively, requires 400 and 1000 antenna units.

It can be seen that as the frequency increases, the interval between antennas becomes smaller and the number of required antennas increases sharply. A smaller interval between antennas makes design of antenna unit and layout design of antenna array extremely difficult, and also limits the performance of the transmitting and receiving antennas. The increase in the number of antennas not only increases cost of the hardware and complexity of the system, but also leads increases of data quantity and time of data acquisition. Therefore, the one-dimensional array shown in FIG. 1 is not feasible in the application of high-frequency millimeter wave (50 GHz-300 GHz) human body imaging security inspection, and has less engineering realization value.

FIG. 2 shows a sparsely distributed multiinput-multioutput antenna layout, where T denotes a transmitting antenna and R denotes a receiving antenna. Although this antenna layout can render the number of antennas to be reduced, it has disadvantages: for example, since a distance between equivalent phase center and the multiple transmitting and multiple receiving antennas is large, only backward projection algorithm can be used and thus a long image reconstruction time is needed due to a slow calculation speed of the backward projection algorithm. A backward projection algorithm is originated from a computed tomography and is an accurate imaging algorithm based on a time domain signal processing. A basic idea of it is that for each imaging point in an imaging area, by calculating time delay between an imaging point and the receiving and transmitting antennas, contributions of all echoes to it are coherently superimposed to obtain a corresponding pixel value of the image point in the image. In this way, the entire imaging area is subjected to a coherent superposition processing point by point, and an image of the imaging area can be obtained. The biggest drawback of this algorithm is that it needs to reconstruct every point in the whole imaging interval, which results in a low reconstruction speed and a great time-consuming. In addition, the receiving antennas at both ends are densely distributed, and the interval between antennas needs to satisfy the Nyquist adoption theorem. For example, in 170 GHz-260 GHz band, typical transmitting and receiving antennas have an antenna aperture of 10.8 mm, while a center frequency corresponds to a half-wavelength of 1.36 mm. Obviously, this type of antenna arrangement is not suitable.

One solution is to provide sparsely receiving antennas so that an interval between the equivalent phase centers is greater than a half wavelength. However, insufficient sampling by the antennas will result in severe artifacts in a reconstructed image.

In order to solve the above-mentioned deficiencies, the present disclosure proposes a sparse multiple transmitting and multiple receiving antenna array arrangement, which can greatly improve data collection speed and utilization rate of antenna units by a sparse design and control technology of a multiple transmitting and multiple receiving antenna array; can completely realize an electrical scanning along the array direction (i.e., control one antenna after another to work by a switch or control the antennas to scan at one frequency after another by a switch) without mechanical scanning, can achieve a fast scan and improve an imaging speed; and can implement a reconstruction algorithm based on a fast Fourier transform to significantly improve a reconstruction speed and reduce hardware complexity and improve engineering achievability.

According to embodiments of the present disclosure, a sparse multiple transmitting and multiple receiving antenna array arrangement for an active millimeter wave imaging is provided, wherein the interval of equivalent units is set to be slightly greater than or equal to a half of a wavelength corresponding to a working frequency by a single station equivalent and an electric switch control and the equivalent unit is the equivalent phase center.

For convenience of explanation, referring to FIG. 3, a multi-transmitting and multi-receiving antenna system is shown. An XY coordinate system is established, in which a sparse transmitting antenna and receiving antenna combination is assumed on the x-axis, and location coordinates of a transmitting antenna and a receiving antenna of the transmitting antenna and receiving antenna combination are respectively represented by $A_t(x_t, y_t)$ and $A(x_r, y_r)$.

For a point target in a target area, I represents scattered point target at $I(x_n, y_n)$, a distance between I and a transmitting antenna $A_t$ is $R_{t,n}$, a distance between I and a receiving antenna $A_r$ is $R_{r,n}$ and $R_0$ is a vertical distance between the center of the target area and the linear array, that is, the imaging distance.

$$R_{t,n} = \sqrt{(x_t - x_n)^2 + (y_t - y_n)^2}$$

$$R_{r,n} = \sqrt{(x_r - x_n)^2 + (y_r - y_n)^2}$$

The echo signal after being scattered by the point target may be expressed as

$$S_n(x_t, y_t; x_r, y_r; K_\omega) = \sigma(x_n, y_n) \exp[-jK_\omega(R_{t,n} + R_{r,n})]$$

wherein, $\sigma(x, y)$ is a scattering coefficient of a human body, $K_\omega$ is a spatial frequency of a frequency stepping signal, and j is an imaginary unit.

For the combination of the transmitting antennas and receiving antennas $A_tA_r$, the echo signal received by it from the target area is:

$$S(x_t, y_t; x_r, y_r; K_\omega) = \iint_D \sigma(x_n, y_n) \exp[-jK_\omega(R_{t,n} + R_{r,n})]dr$$

where D is the imaging area.

An equivalent position for transmitting and receiving signals can be represented by a phase center of antennas. The equivalent position is a physical center of two separate antennas or apertures. In a multiple transmitting and multiple receiving antenna system, one transmitting antenna corresponds to multiple receiving antennas. In embodiments of the present disclosure, the receiving antenna unit and the transmitting antenna unit are not disposed at the same position. The system in which the transmitting and receiving antennas are spatially separated may be simulated by using a virtual system, in which a virtual position is added between each set of transmitting antenna and receiving antenna and is called the equivalent phase center. The echo data acquired by the transmitting antenna and receiving antenna combination can be equivalent to an echo acquired by the self-transmitting and self-receiving antenna at the position where the equivalent phase center Ae(xe, ye) is located.

For the transmitting and receiving antenna combination, a relationship between the physical coordinates of the antennas can be expressed as:

$$x_e = \frac{x_t + x_r}{2}, \ y_e = \frac{y_t + y_r}{2} \ .$$

Using the equivalent phase center principle, an equivalent echo signal can be expressed as:

$$S'(x_t, y_t; x_r, y_r; K_\omega) \approx \iint_D \sigma(x_n, y_n) \exp[-jK_\omega 2R_{e,n}]dr$$

.

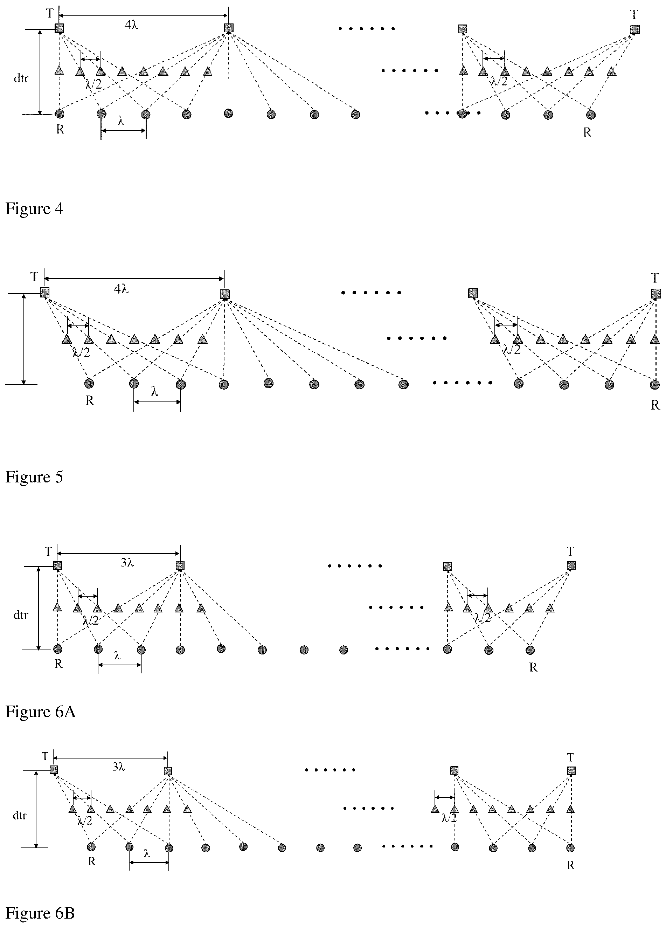

According to the above-described principle of sparse multiple transmitting and multiple receiving antenna array arrangement for an active millimeter wave imaging, an embodiment is provided as shown in FIG. 4. The sparse multiple transmitting and multiple receiving antenna array arrangement as shown in FIG. 4 can be specifically constructed by the following steps:

first, the required number N and interval d of equivalent units are determined according to imaging index parameters such as an operating frequency (wavelength $\lambda$), a length of the antenna array, that is, the antenna aperture Lap, etc.; then, the actual antenna units are arranged in manner that the transmitting antennas and the receiving antennas are separated from each other, such that the transmitting antennas and the receiving antennas are respectively distributed along two straight lines parallel to each other, with an interval of dtr therebetween; next, the arrangement of the transmitting antenna unit is designed such that a total number Nt of the transmitting antennas is an arbitrary number, which is determined by the antenna aperture Lap, and the interval of the transmitting antennas is M$\lambda$ (4$\lambda$ in this embodiment); and next, the arrangement of the receiving antenna unit is designed, such that a total number Nr of the receiving antennas is an arbitrary number, and the receiving antennas are equally spaced with an interval of $\lambda$.

The sparse multiple transmitting and multiple receiving antenna array arrangement for an active millimeter wave security imaging constructed according to the above steps, includes a set of transmitting antennas for transmitting a millimeter wave and a set of receiving antennas for receiving millimeter wave reflected by a human body. In this embodiment, the set of transmitting antennas include a plurality of transmitting antennas arranged along a first row, the set of receiving antennas include a plurality of receiving antennas arranged along a second row, the first row of the set of transmitting antennas is parallel to the second row of the set of the receiving antennas, and the first row of the set of transmitting antennas is located in the same plane as and is spaced apart from the second row of the set of receiving antennas; wherein corresponding to the spacing between two adjacent ones of the first row of the set of transmitting antennas, more than two receiving antennas are arranged in the second row of the set of receiving antennas, so that the number of receiving antennas can be reduced while ensuring image sharpness, because the number of transmitting antennas is less than the number of the receiving antennas and a total number of components is reduced and manufacturing difficulty and cost are thus reduced.

There are many forms to arrange a sparse multiple transmitting and multiple receiving antenna array arrangement. For example, in one embodiment, the first row of the set of transmitting antennas are configured to transmit an electromagnetic wave signals one by one/step by step from left to right (i.e., starting from the transmitting antenna at one end), and the electromagnetic wave signal of each of the transmitting antennas is received by for example 6 or 8 ones (which ensure that the interval between equivalent phase centers is half wavelength) of the receiving antennas, closest to the one of the transmitting antennas transmitting the electromagnetic wave signal. Finally, all the transmitting antennas complete a signal transmission, i.e., complete a scanning of the row of the transmitting antennas. In one embodiment, for example, another mode of operation is provided. The first row of the transmitting antennas are configured to simultaneously transmit electromagnetic wave signals of a same frequency, and the electromagnetic wave signals transmitted by the transmitting antennas are encoded respectively such that signals received by the receiving antennas may be used for imaging after decoded. A one-dimensional scan is completed by transmitting and receiving the electromagnetic wave signals once.

In one embodiment, the first row of the transmitting antennas are configured to transmit electromagnetic wave signals one by one/step by step from left to right (i.e., starting from the transmitting antenna at one end), and the electromagnetic wave signal of each of the transmitting antennas is received by for example 6 or 8 ones of the receiving antennas, closest to the one of the transmitting antennas transmitting the electromagnetic wave signal, and the frequency of the electromagnetic wave signal transmitted by the transmitting antennas gradually increases. Finally, all the transmitting antennas complete a signal transmission, i.e., complete a scanning of the row of the transmitting antennas. In one embodiment, for example, another mode of operation is provided. The first row of the transmitting antennas are configured to transmit electromagnetic wave signals one by one from left to right, and after a one-dimensional scan is completed, the first row of the transmitting antennas is translated in a lateral direction by a certain displacement and then transmit electromagnetic wave signals one by one again and the frequency of the electromagnetic wave signals is different from that in the previous scan.

The transmitting antennas and the receiving antennas may be also configured to work in other modes.

In one embodiment, at least one of the transmitting antennas is aligned with at least one of the receiving antennas such that the connecting line between the two is perpendicular to the direction of the row of the set of transmitting antennas or the set of receiving antennas; however, it should be known this is not necessary.

However, in another embodiment, a line connecting any one of the transmitting antennas to any one of the receiving antennas makes an angle with the direction of the row of the set of transmitting antennas or the set of receiving antennas, which may be advantageous for effective use of a space between each of the transmitting antennas and the receiving antennas near it without causing a pair of transmitting antenna and receiving antenna to be too close to each other.

In one embodiment (as an example), the transmitting antennas are spaced apart from each other by an interval that is four times the wavelength of the radiation waves. The set of receiving antennas includes a plurality of receiving antennas spaced apart from each other by an interval that is equal to the wavelength of the radiation wave. The number of the transmitting antennas and the receiving antennas may be determined according to a length of the array arrangement or the so-called aperture with the transmitting antennas and the receiving antennas being configured to satisfy the above conditions.

Figure 4 shows an arrangement in which a midpoint of a line connecting one of a set of transmitting antennas and a corresponding one of a set of receiving antennas is regarded as the virtual equivalent phase center of the transmitting antenna-receiving antenna pair and a distance between two adjacent equivalent phase centers is half of a wavelength of the radiation wave. In FIG. 4 (similarly in FIG. 5 below), the transmitting antenna indicated by a square T and the receiving antenna indicated by a circle R are connected by a broken line, the midpoint of the line connecting T and R is represented by a triangle, and a position of the triangle indicates a virtual equivalent phase center. One transmitting antenna can generally correspond to a plurality of receiving antennas. For example, one transmitting antenna can correspond to three, four, five, six, seven or eight receiving antennas, that is, a signal transmitted by one transmitting antenna is received and identified by 3, 4, 5, 6, 7, or 8 receiving antennas closest to it. In fact, the signal of the transmitting antenna may also be received by other receiving antennas. However, in practice, signals received by other receiving antennas are not considered, that is, each transmitting antenna is paired with fixed corresponding receiving antennas to perform inspection. Each pair of transmitting antenna-receiving antenna has a virtual equivalent phase center. The positions of these virtual equivalent phase centers, indicated by the triangles in FIG. 4, are spaced apart from each other by a half of the wavelength of the radiation wave. In order to reduce the number of transmitting antennas and the receiving antennas and generally avoid overlapping of the equivalent phase centers, the distance between two adjacent equivalent phase centers may be configured to be equal to about a half of the wavelength of the radiation wave to satisfy formation of a final clear image. For example, the distance between two adjacent equivalent phase centers is 0.3 to 0.7 times the wavelength of the radiation wave. In other words, when the distance between two adjacent equivalent phase centers is greater than half of the wavelength of the radiation wave, the image may be unclear.

According to embodiments of the present disclosure, the distance between the first row of the set of transmitting antennas and the second row of the set of receiving antennas may be arbitrary. However, it is advantageous that the distance between the first row of the set of transmitting antennas and the second row of the set of receiving antennas is as small as possible, because an excessive distance will causes an equivalent phase center condition (an interval between two adjacent equivalent phase centers is half of the wavelength or close to half of the wavelength) is not satisfied; however, in practical applications, a too short distance is difficult to implement, and causes problems of crosstalk and no enough space for arranging the antennas. In one embodiment, the first row of the set of transmitting antennas is spaced apart from the second row of the set of receiving antennas by a distance less than 10% of an imaging distance.

In one embodiment, the sparse multiple transmitting and multiple receiving antenna array arrangement further includes a control switch operable to control the set of transmitting antennas to sequentially transmit millimeter waves.

In one embodiment, the sparse multiple transmitting and multiple receiving antenna array arrangement is configured to perform a scan of the set of transmitting antennas by sequentially transmitting radiation waves through the set of transmitting antennas, to gradually complete a two-dimensional scan of the human body by displacing the multiple transmitting and multiple receiving antenna array arrangement along an orthogonal direction to the row direction of the set of transmitting antennas; and to perform imaging based on a Fourier transform-based synthetic aperture holography algorithm. As shown in FIG. 4, starting from the first transmitting antenna on the left side, a radiation wave having a wavelength of the order of magnitude of millimeter is transmitted such that the receiving antenna receives a return signal, and then the second transmitting antenna transmits a radiation wave, which is sequentially operated to complete a scan. Subsequently, the arrangement is moved in an upward or downward direction of the paper surface by a step distance, and the above scan is repeated again to gradually perform a scan on the human body.

In one embodiment, the sparse multiple transmitting and multiple receiving antenna array arrangement is configured to perform a Fourier transform-based synthetic aperture holography algorithm, and image reconstruction is performed on the correct imaging region at one time, and the imaging formula is:

$$\sigma(x, y) = FT_{2D}^{-1}\left[ FT_{2D}\left[ s\left(x_t, y_t, x_r, y_r, \mathrm{K}_\omega\right)\right] e^{-j\sqrt{4k^2 - k_x^2 - k_y^2}\, R_0} \right]$$

where, $\sigma(x, y)$ is a scattering coefficient of a human body, $R_0$ is the imaging distance, $FT_{2D}$ is the two-dimensional Fourier

transform, $FT_{2D}^{-1}$ is the two-dimensional inverse Fourier transform, j is an imaginary unit, k is a propagation constant, kx and ky are spatial propagation constants respectively;

$$S(x_t, y_t; x_r, y_r; K_\omega) = \iint_D \sigma(x_n, y_n) \exp[-jK_\omega(R_{t,n} + R_{r,n})]dr$$

is an echo signal from the human body received by a combination of a pair of transmitting antenna-receiving antenna; and $K_\omega$ is the spatial frequency of a frequency stepping signal.

During operation, the transmitting antennas sequentially transmit radiation waves by controlling the control switch. When the first transmitting antenna works, the first to fourth receiving antennas collect the echo data; when the second transmitting antenna operates, the first to eighth receiving antennas collect the echo data; when the third transmitting antenna operates, the fifth to twelfth receiving antennas collect the echo data; in turn, when each transmitting antenna operates, eight receiving antennas corresponding to it collect the data; until the last transmitting antenna, that is, the Nt[th] transmitting antenna operates, and the last four receiving antennas collect the echo data.

After all the transmitting antennas sequentially transmit, a horizontal data acquisition is completed, and finally (Nt-1)×8 echo data is obtained. According to the above equivalent phase center principle, these echo data can be equivalent to echo data collected by (Nt-1)×8 equivalent phase centers. Moreover, the interval between these equivalent phase centers is 0.5λ, which satisfies the equivalent cell distribution required by Nyquist sampling law.

Then, synthetic aperture scanning, that is, a mechanical scan, is performed in the orthogonal direction to the array to complete a two-dimensional aperture scan. The step size of the scan is also needed to satisfy the adoption theorem, that is, the half wavelength of 0.5λ.

After the 2D aperture scan is completed, the collected echo data can be expressed as $S(x_t, y_t; x_r, y_r; K_w)$.

Finally, in combination with the fast Fourier transform-based synthetic aperture holography algorithm, fast reconstruction can be achieved and imaging can be completed. The purpose of the imaging algorithm is to invert the image of the target from the echo expression, that is, the scattering coefficient $\sigma(x, y)$ of the target. The Fourier transform-based synthetic aperture holography algorithm does not need to reconstruct the entire imaging region point by point like the subsequent projection algorithm, instead of, completes the reconstruction of the correct imaging region at one time for its advantages of the Fast Fourier Transform. The imaging formula is as below:

$$\sigma(x, y) = FT_{2D}^{-1}\left[ FT_{2D}\left[ s(x_t, y_t, x_r, y_r, K_\omega)\right]e^{-j\sqrt{4k^2 - k_x^2 - k_y^2}R_0}\right]$$

where $R_0$ is the imaging distance.

In another embodiment, as shown in FIG. 5, the transmitting antenna array and the receiving antenna array are misaligned, and the first antenna at the left end of the transmitting antenna array and the first antenna at the left end of the receiving antenna array are at a distance of λ.

The sparse multiple transmitting and multiple receiving antenna array arrangement provided in the present disclosure is based on the single-station equivalent principle, that is, the array is designed based on single station equivalent and is combined with control of the control switch, so that the finally formed equivalent phase centers (also referred to as equivalent units or equivalent antenna units in the present disclosure) satisfy the Nyquist sampling law. That is, the interval between the equivalent antenna units finally formed by the transmitting and receiving antenna array is slightly greater than or equal to half the wavelength corresponding to the operating frequency.

According to the above principle, the embodiments of the present disclosure adopt the sparse array design and switch control technology for the array to finally realize the distribution requirement of the equivalent antenna units that the interval between the frequency band millimeter wave, and taking into account the engineering achievability.

Referring to FIG. 4, a design process for an array of 63 transmitting antennas and 248 receiving antennas is taken as an example to introduce a sparse multiple transmitting and multiple receiving antenna array arrangement and a method of arranging the same according to the present disclosure. Those skilled in the art can implement an arrangement of a sparse array according to the teachings of the present invention.

First, according to requirements for the imaging index parameter, such as imaging resolution, sidelobe level and other parameters, the required number of equivalent units and the interval of the same are determined, that is, the distribution of the equivalent virtual array is determined. The interval of the equivalent units is needed to be at most slightly greater than or equal to a half of the operating wavelength. Then, the actual antenna units are arranged according to the separated arrangement of the transmitting antennas and the receiving antennas such that the transmitting antennas and the receiving antennas are respectively distributed along two straight lines parallel to each other and a spacing between the two straight lines may be arbitrary value, but be as small as possible (may be $\lambda$, $1.5\lambda$, $2\lambda$, $3\lambda$, $4\lambda$, etc.) and may be reasonably selected according to the actually designed antenna unit size and array size design requirement. In the present disclosure, the array size may be 1 m.

Next, as shown in FIG. 4, the arrangement of the transmitting antenna units is designed. The total number of the transmitting antennas is 63 (the total number is expandable to any other number; and is specifically determined by factors such as an imaging resolution, an imaging range, etc.), and the interval of the transmitting antennas is $4\lambda$.

Next, the arrangement of the receiving antenna units is designed. The total number of the receiving antennas is 248 (the total number is expandable to any other number, and is specifically determined by factors such as the imaging resolution, the imaging range, etc.), and the interval of the receiving antennas is $\lambda$. An arrangement where the first antenna of the transmitting antenna array and the first antenna of the receiving antenna array are aligned is shown in Figure 4.

In the embodiment shown in FIG. 5, the first antenna of the transmitting antenna array and the first antenna of the receiving antenna array are misaligned. The first antenna of the transmitting antenna array at left side is spaced from the first antenna of the receiving antenna array at left side by a distance of $\lambda$ (which may be other arbitrary value, and may generally be a value between $[-5\lambda, 5\lambda]$).

In operation, a difference treatment is performed for the first transmitting antenna and corresponding first M/2 (i.e., 4) receiving antennas; in turn, difference treatments are respectively performed for the second transmitting antenna to the $N_t$-$1^{th}$ transmitting antenna and corresponding M (i.e., 8) receiving antennas; and the difference treatment is performed for the $N_t^{th}$ transmitting antenna and corresponding last M/2 (i.e., 4) receiving antennas, to obtain an equivalent unit distribution with an equal interval of $0.5\lambda$ and finally obtain the equivalent unit distribution satisfying the Nyquist sampling law. The transmitting antennas are in turn switched by control of an electric switch to transmit to complete a data acquisition. Then, the synthetic aperture scanning is performed in an orthogonal direction to the array to complete a two-dimensional aperture scan. Finally, fast reconstruction can be achieved to complete an imaging test in combination with a fast Fourier transform-based synthetic aperture holography algorithm.

FIG. 6 shows another embodiment of the present disclosure, and unlike the embodiment of FIG. 4, the interval between the transmitting antennas is $3\lambda$, and the interval between the receiving antennas is $\lambda$. In FIG. 6A, the first transmitting antenna is aligned with the first receiving antenna. In FIG. 6B, the first transmitting antenna is offset from the first receiving antenna by $\lambda$.

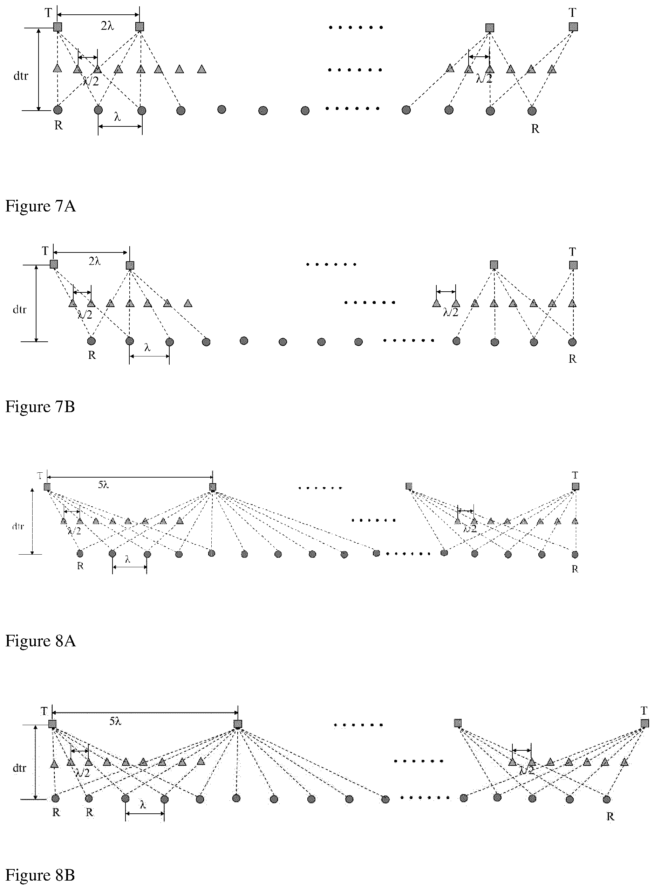

Figure 7 shows another embodiment of the present disclosure, and unlike the embodiment of Figure 4, the interval between the transmitting antennas is $2\lambda$, and the interval between the receiving antennas is $\lambda$. In FIG. 7A, the first transmitting antenna is aligned with the first receiving antenna. In FIG. 7B, the first transmitting antenna is offset from the first receiving antenna by $\lambda$.

Figure 8 shows another embodiment of the present disclosure, and unlike the embodiment of Figure 4, the interval between the transmitting antennas is $5\lambda$, and the interval between the receiving antennas is $\lambda$. In FIG. 8A, the first transmitting antenna is aligned with the first receiving antenna. In FIG. 8B, the first transmitting antenna is offset from the first receiving antenna by $\lambda$.

In operation, a difference treatment is performed for the first transmitting antenna and corresponding first five receiving antennas, then difference treatments are respectively performed for the second transmitting antenna to the $N_t$-$1^{th}$ transmitting antenna and corresponding 10 receiving antennas, and finally the difference treatment is performed for the $N_t^{th}$ transmitting antenna and corresponding last five receiving antennas, to obtain an equivalent unit distribution with an equal interval of $0.5\lambda$ and an equivalent unit distribution satisfying Nyquist sampling law. Through the control by the electric switch, the transmitting antennas are sequentially switched to complete a data acquisition. Synthetic aperture scanning is then performed in the orthogonal direction to the array to complete the two-dimensional aperture scanning. Finally, the fast reconstruction can be achieved and the imaging test can be completed in combination with the fast Fourier transform-based synthetic aperture holography algorithm. For example, 51 transmitting antennas and 250 receiving antennas can be provided to form an array of 1 m.

According to another embodiment of the present disclosure, unlike the above embodiment, a sparse multiple transmitting and multiple receiving antenna array arrangement for active millimeter wave security imaging includes a plurality of rows, parallel to each other, of transmitting antennas for transmitting millimeter waves and a plurality of rows, parallel to each other, of receiving antennas for receiving millimeter waves reflected by the human body, whereby the transmitting antennas can transmit a stronger signal, the receiving antennas can obtain a stronger signal, and the scanning precision is improved. Each row of transmitting antennas includes a plurality of transmitting antennas, and each row of receiving antennas includes a plurality of receiving antennas. In this way, the plurality of rows of transmitting antennas sequentially transmits radiation waves having a wavelength of the order of magnitude of millimeter, complete one scan, which greatly improves the scanning efficiency, increases the area of the human body covered by one scan, and improves the scanning speed. In the present embodiment, the electromagnetic wave signal transmitted by the transmitting antennas can be encoded such that the signal received by the receiving antennas that are preset to receive it can be identified and decoded for use in generating an image.

In this embodiment, the plurality of rows of transmitting antennas are parallel to the plurality of rows of receiving antennas; and the plurality of rows of transmitting antennas and the plurality of rows of receiving antennas are spaced apart from each other. One row of transmitting antennas of the rows of transmitting antennas and one row of receiving antennas of the rows of receiving antennas constitute the above-described sparse multiple transmitting and multiple receiving antenna array arrangement.

In other embodiments, at least some of the equivalent phase centers of adjacent transmitting antenna and receiving antenna pairs are alternately arranged in a row. For example, in an embodiment of the present disclosure, a plurality of transmitting antennas may be divided into a plurality of transmitting antenna groups, such that the transmitting antennas in the same transmitting antenna group are separated by a distance that is one times the wavelength of the radiation wave and two adjacent ones of the transmitting antenna groups are separated by a distance that is an integer times the wavelength of the radiation wave, and the integer is not less than two.

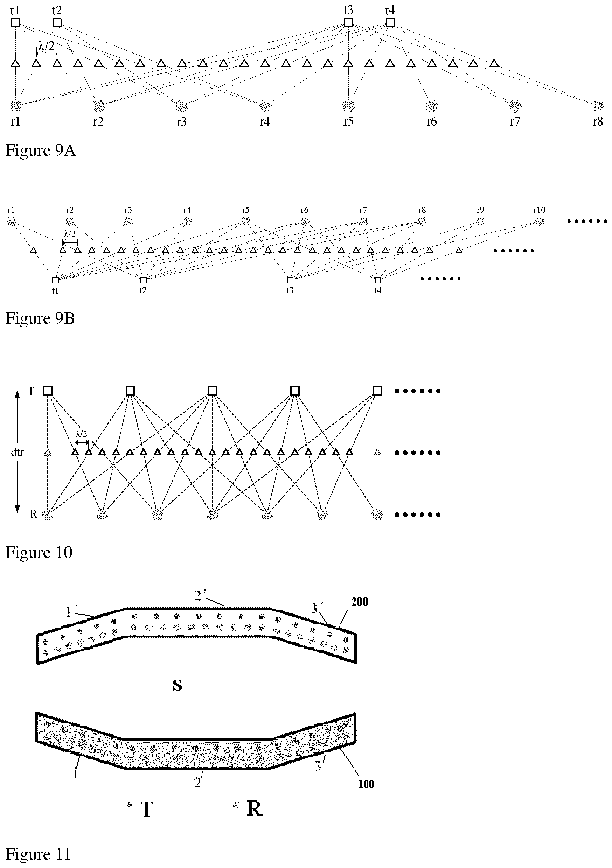

FIG. 9A shows an arrangement of the transmitting antennas and the receiving antennas of an embodiment of the present disclosure. In FIG. 9A, t denotes a transmitting antenna, and r denotes a receiving antenna, t1 and t2 are close to each other and can be regarded as a group. t3 and t4 are close to each other and can be regarded as a group. The equivalent phase center for t1-r1 is adjacent to an equivalent phase center for t2-r2, and the equivalent phase center for t2-r2 is adjacent to the equivalent phase center for t1-r2, that is, the equivalent phase centers for t1-r1 and t1-r2 are not adjacently arranged, but the equivalent phase centers for t2-r1 is arranged between the two. For such an arrangement, the signals of the transmitting antennas are required to be encoded and the receiving antennas decode the encoded signal received from the predetermined transmitting antennas and then process it. The receiving antenna does not or cannot process the signals of other transmitting antennas. Signals that are fed back at equivalent phase centers spaced and arranged at about a half of the wavelength of the millimeter wave are used to form a millimeter wave image.

In another embodiment, the transmitting antennas may be divided into a plurality of transmitting antenna groups. An interval between the transmitting antennas in the same transmitting antenna group is an integer, not less than two, times the wavelength of the radiation wave, and a distance between adjacent transmitting antenna groups is an integer, not less than two, times the wavelength of the radiation wave. Figure 9B illustrates one embodiment of the present disclosure. It can be seen from FIG. 9B that two antennas (e.g., t1 and t2) are used as a group and t1 is located at position that is distant from r1 by 1.5 times the wavelength of millimeter wave, t1 is distant from t2 by an interval that is three times the wavelength of millimeter wave, t2 is distant from t3 by an interval that is five times the wavelength of millimeter wave and the spacing between a transmitting antenna t and a receiving antenna r is 3 times the wavelength of millimeter wave. The spacing between the transmitting antenna and the receiving antenna may be any value as long as the transmitting antenna and receiving antenna array can be placed. However, in order to decrease coupling between the transmitting antenna and receiving antenna, the spacing between the transmitting antenna and the receiving antenna is generally required to be less than 10% of the imaging distance. The equivalent phase center of t2-r1 is located between those of t1-r2 and t1-r3 and the equivalent phase center of t1-r3 is located between those of t2-r1 and t2-r2. The equivalent phase centers of the transmitting antenna-receiving antenna groups are alternately arranged. It should be noted that the order of the data of the receiving antennas needs to be adjusted to a correct order before reconstruction of the millimeter wave image.

In FIG. 9A, when a length of the array is 1 m, 128 receiving antennas are required while 64 transmitting antennas are required. If the imaging distance is 0.35 m, a spacing between the transmitting antenna array and the receiving antenna array is 3 times the wavelength of the millimeter wave.

In actual operation, the transmitting antenna t1 transmits a signal, the receiving antennas r1-r4 receive the signal; then the transmitting antenna t2 transmits a signal, the receiving antennas r1-r4 receive the signal; then the transmitting antenna t3 transmits a signal, the receiving antennas r1-r8 receive the signal; subsequently, the transmitting antenna t4 transmits a signal, the receiving antennas r1-r8 receive the signal; under this rule, until the transmitting antenna t67 transmits a signal, the receiving antennas r121-r128 receive the signal; finally, the transmitting antenna t68 transmits a signal, the receiving antennas r121-r128 receive the signal. A total of 504 equivalent phase center points are formed. Before image reconstruction, the order of the equivalent phase centers needs to be adjusted, that is, the equivalent phase centers are spatially arranged from left to right.

In one embodiment, the interval between the transmitting antennas is greater than one times the wavelength of the radiation wave, and the receiving antennas are spaced apart from each other by a distance greater than one times the wavelength of the radiation wave; and the total number of the transmitting antennas and the total number of the receiving antennas are different from each other and are relatively prime.

Figure 10 shows an embodiment in which one transmitting antenna corresponds to five receiving antennas, one receiving antenna is capable of receiving and identifying encoded signals of four transmitting antennas, and equivalent phase centers determined by one transmitting antenna and corresponding receiving antennas and equivalent phase centers determined by the adjacent transmitting antenna and corresponding receiving antennas are alternately arranged, and an interval between the equivalent phase centers is 0.3 to 0.7 times the wavelength of the millimeter wave, and is generally 0.5 times the wavelength of the millimeter wave.

The array structure in FIG. 10 is a periodic sparse relatively -prime array, in which the number of elements in the array of transmitting antennas and the number of elements in the array of receiving antennas are relatively prime, and a quasi-single station approximation is performed to regard a midpoint of a line connecting the transmitting antenna and receiving antenna as a position of a single transmitting antenna and single receiving antenna array, obtaining a uniform equivalent line array. Assuming that the numbers of transmitting antennas and receiving antennas in a cycle are $N_2$ and $N_1$ respectively, in order to obtain an array of equivalent phase centers that can uniformly sample, $N_1$ and $N_2$ are required to be not equal to each other and have no common divisor. Generally, $N_2$ is greater than $N_1$. A length of the antennas of one cycle in the array is D, the interval between the transmitting antennas in the array is $D/N_1$, and the interval between the receiving antennas in the array is $D/N_2$. One transmitting antenna will correspond to $2N_2$ equivalent phase centers, and the total number of equivalent phase centers in one cycle is $2N_1N_2$. Assuming that the number of periodic array cycles of the array is M, the total number of the equivalent phase centers is $2MN_1N_2$. The spacing dtr between the transmitting antenna array and the receiving antenna array satisfies the same condition as the array structure in the previous embodiment.

A sparse multiple transmitting and multiple receiving antenna array arrangement for active millimeter wave security imaging according to the above embodiments includes a set of transmitting antennas for transmitting millimeter wave and a set of receiving antennas for receiving millimeter waves reflected by a human body, the set of transmitting antennas comprising a plurality of transmitting antennas arranged along a first row, the set of receiving antennas comprising a plurality of receiving antennas arranged along a second row, the first row of the set of transmitting antennas being arranged in parallel with, spaced from and located in the same plane as the second row of the set of receiving antennas; wherein an interval between two adjacent ones of the transmitting antennas arranged along the first row is not less than one times the wavelength of the radiation wave, and an interval between the receiving antennas arranged along the second row is not less than one times the wavelength of the radiation wave such that the total number of transmitting antennas and receiving antennas is reduced relative to the structure where the transmitting antennas and receiving antennas are configured to be in one-to-one correspondence to each other and are spaced from each other by one times the wavelength of the radiation wave, thereby reducing the manufacturing cost and difficulty.

The sparse multiple transmitting and multiple receiving antenna array arrangement may work in many manners. For example, in one embodiment, the sparse multiple transmitting and multiple receiving antenna array arrangement further includes a control switch operable to control the set of transmitting antennas to sequentially transmit millimeter waves. By the control switch, the first row of transmitting antennas transmit electromagnetic wave signals one by one/step by step from left to right (i.e., starting from the transmitting antenna at one end), and the electromagnetic wave signal of each of the transmitting antennas is received by, for example, six or eight ones of the receiving antennas closest to it (ensuring that an interval between equivalent phase centers is half of the wavelength). Finally, all the transmitting antennas complete a signal transmission, i.e., a scanning of the row of the transmitting antennas.

In one embodiment, for example, another mode of operation is provided. The first row of transmitting antennas simultaneously transmit electromagnetic wave signals of a same frequency, a signal transmitted by each of the transmitting antennas is encoded, and signals received by the receiving antennas are required to be decoded before being used for imaging. A one-dimensional scan is completed by completing transmission and reception of the electromagnetic wave signals.

In one embodiment, the first row of transmitting antennas transmit electromagnetic wave signals one by one/step by step from left to right (i.e., starting from the transmitting antenna at one end), the electromagnetic wave signal of each of the transmitting antennas is received by such as six or eight receiving antennas closest to it, and the frequency of the electromagnetic wave signal transmitted by the transmitting antennas gradually increases. Finally, all the transmitting antennas complete signal transmission, that is, a scanning of the entire row of transmitting antennas is completed.

In one embodiment, for example, there is also a working manner in which the first row of transmitting antennas transmit electromagnetic wave signals one by one from left to right, and after completing a one-dimensional scan, the first row of transmitting antennas are translated in the transverse direction to the arrangement direction by a certain displacement and then transmit electromagnetic wave signals one by one, wherein the frequency of the electromagnetic wave signal is different from that in the previous scan.

The transmitting antennas and receiving antennas can also be configured to work in other modes, which can be obtained as described with reference to embodiments of Figures 4-8 and are not repeatedly described herein.

An embodiment of the present disclosure also discloses a sparse multiple transmitting and multiple receiving antenna array arrangement for active millimeter wave security imaging, which includes a plurality of rows of transmitting antennas, parallel to each other, for transmitting millimeter waves and a plurality of rows of receiving antennas, parallel to each other, for receiving millimeter waves reflected by a human body, each row of transmitting antennas includes a plurality of transmitting antennas, each row of receiving antennas includes a plurality of receiving antennas; the plurality of rows of transmitting antennas are parallel to and spaced apart from the plurality of rows of receiving antennas, wherein one row of transmitting antennas of the plurality of rows of transmitting antennas and one row of receiving antennas of the plurality of rows of receiving antennas form the sparse multiple transmitting and multiple receiving antenna array arrangement described above with reference to Figures 4-10. That is not described repeatedly herein.

In an embodiment of the present disclosure, the sparse multiple transmitting and multiple receiving antenna array arrangement may include: a plurality of segments with an angle formed between two adjacent ones of the segments; the set of transmitting antennas and the set of receiving antennas respectively include ones that are respectively arranged in the plurality of segments. In this embodiment, since the sparse multiple transmitting and multiple receiving antenna array arrangement includes a plurality of segments, and an angle is formed between the segments, the plurality of segments can surround a semi-closed space. As shown in FIG. 11, in actual operation, the plurality of segments of the sparse multiple transmitting and multiple receiving antenna array arrangement surround an object to face different sides of the object. In other words, the sparse multiple transmitting and multiple receiving antenna array arrangement is configured in a broken line shape. The sparse multiple transmitting and multiple receiving antenna array arrangement having a plurality of segments with an angle formed between two adjacent ones of the segments, and having the broken line shape, with respect to a sparse multiple transmitting and multiple receiving antenna array arrangement arranged in a straight line, can perform inspection on a human body from different orientations and thus improve imaging effect of the side of the human body to some extent.

For example, in one embodiment, the sparse multiple transmitting and multiple receiving antenna array arrangement includes a first segment disposed in a first vertical plane; and a second segment disposed in a second vertical plane; wherein an angle $\theta_{12}$ between the first vertical plane and the second vertical plane is not zero; the set of transmitting antennas and the set of receiving antennas respectively include ones arranged in the first segment and ones arranged in the second segment. The sparse multiple transmitting and multiple receiving antenna array arrangement including the first segment and the second segment, forming the included angle therebetween, can perform an inspection on the object from two orientations with respect to an antenna array arrangement along a straight line. For example, $\theta_{12}$ may be any angle in a range from 90 degrees to 180 degrees.

Further, in another embodiment, the sparse multiple transmitting and multiple receiving antenna array arrangement further includes a third segment disposed in a third vertical plane, an angle between the third vertical plane and the first vertical plane and that between the third vertical plane and the second vertical plane are $\theta_{13}$ and $\theta_{23}$, respectively, and are not zero. The set of transmitting antennas and the set of receiving antennas respectively include ones disposed in the third segment. Figure 11 shows such an arrangement, in which smaller dots represent the transmitting antennas and larger dots represent the receiving antennas. In FIG. 11, the sparse multiple transmitting and multiple receiving antenna array arrangement includes a first segment 1, a second segment 2, and a third segment 3 that form included angles, and may perform inspection on the object from three orientations. For example, $\theta_{13}$ and $\theta_{23}$ may be any angle in a range from 90 degrees to 180 degrees.

In other embodiments, the sparse multiple transmitting and multiple receiving antenna array arrangement may further include a fourth segment, a fifth segment, etc., which can be set according to requirements by those skilled in the art based on the teachings of the present disclosure.

It should be noted that the transmitting antennas and the receiving antennas in each segment of the sparse multiple transmitting and multiple receiving antenna array arrangement may be arranged according to the above embodiments of the present disclosure, and are not repeatedly described herein again.

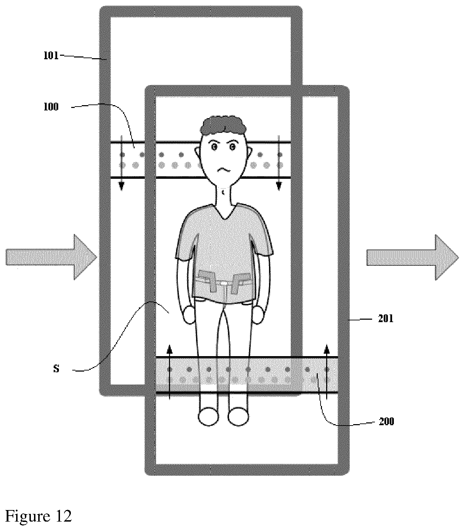

An embodiment of the present disclosure further provides a human body security inspection apparatus, comprising one or more above-described sparse multiple transmitting and multiple receiving antenna array arrangements. FIG. 12 shows a schematic diagram of a human body security inspection apparatus. The human body security inspection apparatus includes a first sparse multiple transmitting and multiple receiving antenna array arrangement 100 and a second sparse multiple transmitting and multiple receiving antenna array arrangement 200, wherein the first sparse multiple transmitting and multiple receiving antenna array arrangement 100 is arranged to be opposite to the second sparse multiple transmitting and multiple receiving antenna array arrangement 200 to define an inspection space S for the human body security inspection apparatus therebetween. The first sparse multiple transmitting and multiple receiving antenna array arrangement 100 and the second sparse multiple transmitting and multiple receiving antenna array arrangement 200 are configured to be translatable in an up-down direction in a vertical plane to perform scanning. For example, the first sparse multiple transmitting and multiple receiving antenna array arrangement 100 is configured to scan from top to bottom in the vertical plane where it is located, and the second sparse multiple transmitting and multiple receiving antenna array arrangement 200 is configured to scan from bottom to top in the vertical plane where it is located.

It should be noted that only one first sparse multiple transmitting and multiple receiving antenna array arrangement 100 can also perform a human body security inspection.

After completing a scan of the whole human body to obtain a complete scattering field data and then transmit the data to a data processing unit, an image of the inspected human body is formed by reconstructing the data by using a holographic algorithm. Finally, the image is transmitted to, for example, a display unit to be displayed for observation by an operator.

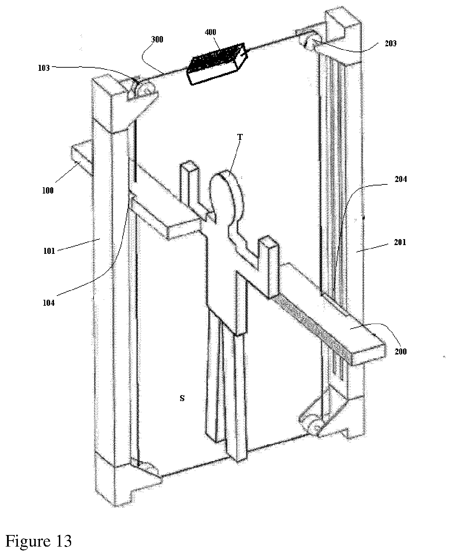

Specifically, as shown in FIG. 13, a first frame 101 may be provided with a first rail device 104, and the first sparse multiple transmitting and multiple receiving antenna array arrangement 100 is slidably coupled to the first rail device 104 so as to be movable along the first rail device 104 to perform a first scan on the object (human body) to be inspected; the second frame 201 may be provided with a second rail device 204, and the second sparse multiple transmitting and multiple receiving antenna array arrangement 200 is slidably coupled to the second rail device 204 so as to be movable along the second rail device 204 to perform a second scan on the object (human body) to be inspected. The first rail device 104 and the second rail device 204 may be parallel to each other.

The human body security inspection apparatus can include a drive device 400 for driving the first sparse multiple transmitting and multiple receiving antenna array arrangement 100 to move along the first rail device 104 and/or drive the second sparse multiple transmitting and multiple receiving antenna array arrangement 200 to move along the second rail device 204. The human body security inspection apparatus may further include a constraint device for constraining a motion relationship between the first sparse multiple transmitting and multiple receiving antenna array arrangement 100 and the second sparse multiple transmitting and multiple receiving antenna array arrangement 200 to cause them to be moveable only in opposite directions.

In one embodiment, the constraint device is configured to constrain a positional relationship between the first sparse multiple transmitting and multiple receiving antenna array arrangement 100 and the second sparse multiple transmitting and multiple receiving antenna array arrangement 200 to cause them to be movable only at equal speeds.

In particular, the constraint device is a rigid connecting strip 300 connecting the first sparse multiple transmitting and multiple receiving antenna array arrangement 100 and the second sparse multiple transmitting and multiple receiving antenna array arrangement 200. The first rail device 104 is provided with a first fixed pulley 103, the second rail device 204 is provided with a second fixed pulley 203, and the connecting strip passes from the first sparse multiple transmitting and multiple receiving antenna array arrangement 100 through the first fixed pulley 103 and the second fixed pulley 203 in sequence to connect to the second sparse multiple transmitting and multiple receiving antenna array arrangement 200.

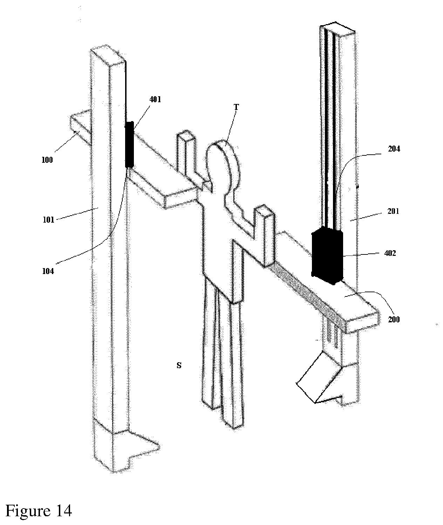

In another embodiment, as shown in FIG. 14, the human body security inspection apparatus includes a first frame 101 on which the first sparse multiple transmitting and multiple receiving antenna array arrangement 100 is mounted so as to be movable up and down on the first frame 101. The human body security inspection apparatus includes a second frame 201 on which the second sparse multiple transmitting and multiple receiving antenna array arrangement 200 is mounted so as to be movable up and down on the second frame 201. The first rail device 104 may be disposed on the first frame 101, and the first sparse multiple transmitting and multiple receiving antenna array arrangement 100 is slidably coupled to the first rail device 104 to be movable along the first rail device 104 so as to perform a first scan on an object (a human body) to be inspected ; the second rail device 204 may be disposed on the second frame 201, and the second sparse multiple transmitting and multiple receiving antenna array arrangement 200 is slidably coupled to the second rail device 204 to be movable along the second rail device 204 so as to perform a second scan on the object (the human body) to be inspected. The drive device includes a first drive device 401 that directly drives the first sparse multiple transmitting and multiple receiving antenna array arrangement 100, and the first sparse multiple transmitting and multiple receiving antenna array arrangement 100 is coupled to the first rail device 104 by the first drive device 401. The drive device includes a second drive device 402 that directly drives the second sparse multiple transmitting and multiple receiving antenna array arrangement 200, and the second sparse multiple transmitting and multiple receiving antenna array arrangement 200 is coupled to the second rail device 204 by the second drive device 402. With this arrangement, the first sparse multiple transmitting and multiple receiving antenna array arrangement 100 and the second sparse multiple transmitting and multiple receiving antenna array arrangement 200 can be independently controlled, for example, moving directions of the two can be the same or opposite, and moving speeds of the two can be the same or different. In the present embodiment, the constraint device such as the first fixed pulley and the second fixed pulley and the rigid connecting strip 300 is not provided.

In the whole process of scanning the object to be inspected by the first sparse multiple transmitting and multiple receiving antenna array arrangement 100 together with the second sparse multiple transmitting and multiple receiving antenna array arrangement 200, the first sparse multiple transmitting and multiple receiving antenna array arrangement 100 and the second sparse multiple transmitting and multiple receiving antenna array arrangement 200 transmit millimeter waves at different times.

For example, when starting scanning, the first sparse multiple transmitting and multiple receiving antenna array arrangement 100 transmits millimeter waves from the lowest frequency to the highest frequency, and the second sparse multiple transmitting and multiple receiving antenna array arrangement 200 transmits millimeter waves from the highest frequency to the lowest frequency; or, the second sparse multiple transmitting and multiple receiving antenna array arrangement 200 transmits millimeter waves from the lowest frequency to the highest frequency, and the first sparse multiple transmitting and multiple receiving antenna array arrangement 100 transmits millimeter waves from the highest frequency to the lowest frequency. In the present embodiment, the first sparse multiple transmitting and multiple receiving antenna array arrangement 100 and the second sparse multiple transmitting and multiple receiving antenna array arrangement 200 can scan separately, and scan signals of the two are used to form an image of the human body.

The human body security inspection apparatus according to embodiments of the present disclosure further includes a processor or controller configured for controlling the drive device to perform the scan, and also configured for processing the received millimeter wave signals, processing the millimeter wave echo signals of the first sparse multiple transmitting and multiple receiving antenna array arrangement 100 and the second sparse multiple transmitting and multiple receiving antenna array arrangement 200 into the image of a surface of the human body, and further configured for receiving an externally input command or the like.

When using the human body security inspection apparatus of the present disclosure to perform security inspection on a human body such as a passenger, it is only needed that the human body stays in the human body security inspection apparatus, that is, between the first sparse multiple transmitting and multiple receiving antenna array arrangement 100 and the second sparse multiple transmitting and multiple receiving antenna array arrangement 200, and the first sparse multiple transmitting and multiple receiving antenna array arrangement 100 and the second sparse multiple transmitting and multiple receiving antenna array arrangement 200 simultaneously scan or separately scan a side of the human body, and then the signal obtained by scanning is sent to the processor or controller to be processed to obtain the image of the human body, thereby completing a convenient and quick inspection.

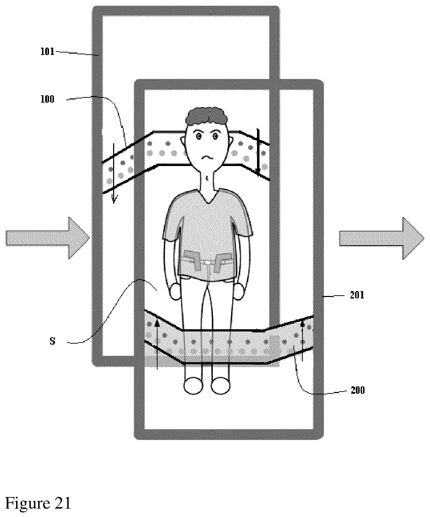

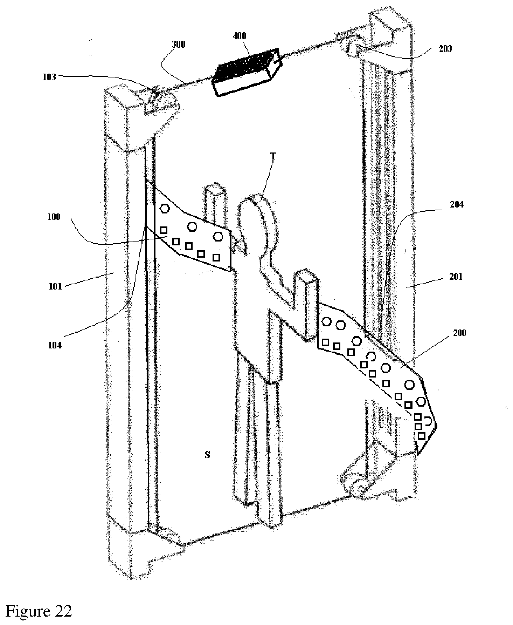

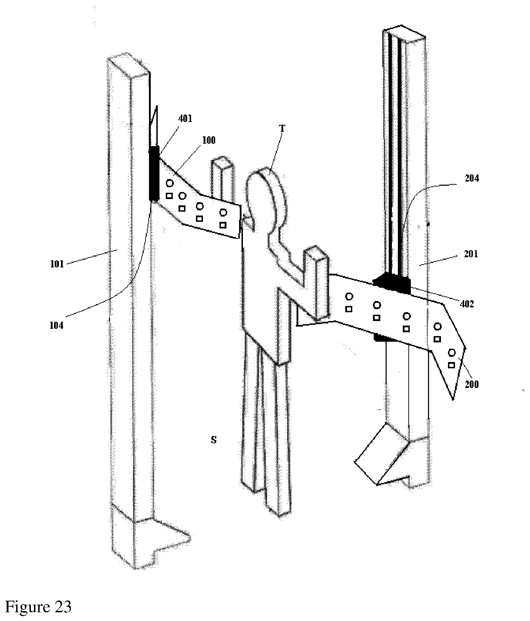

Figures 21-23 illustrate three further embodiments of the present disclosure, which may be variants of the embodiments illustrated in Figures 12-14, respectively, wherein the first sparse multiple transmitting and multiple receiving antenna array arrangement 100 and the second sparse multiple transmitting and multiple receiving antenna array arrangement 200 are arranged in the arrangement of the embodiment as shown in Figure 11, that is, the first sparse multiple transmitting and multiple receiving antenna array arrangement 100 and the second sparse multiple transmitting and multiple receiving antenna array arrangement 200 arranged in a straight line, as shown in Figures 12-14, are respectively replaced by the first sparse multiple transmitting and multiple receiving antenna array arrangement 100 and the second sparse multiple transmitting and multiple receiving antenna array arrangement 200 respectively constituted by a plurality of segments that are angled to each other, as shown in Figure 11. The arrangement in other aspects of the embodiments of Figures 21-23 is similar to that of the embodiments illustrated in Figures 12-14 and will not be described herein repeatedly again.

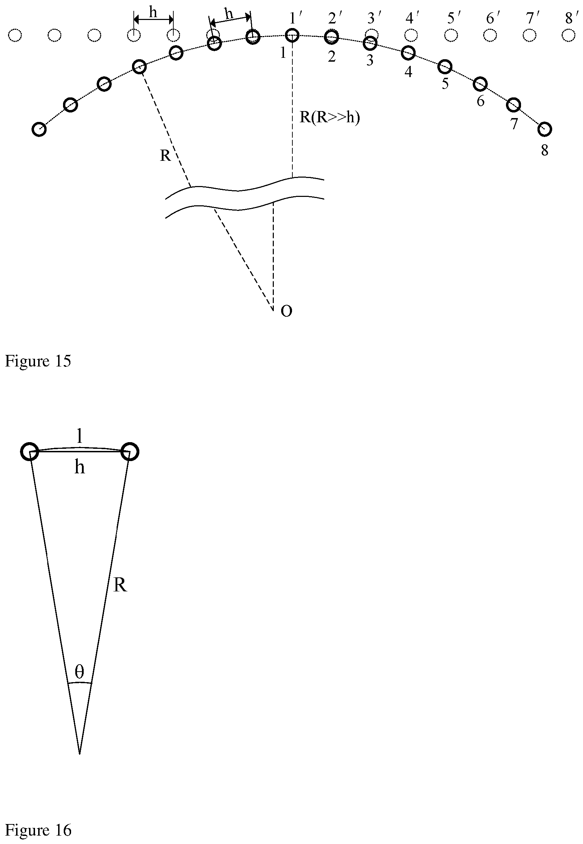

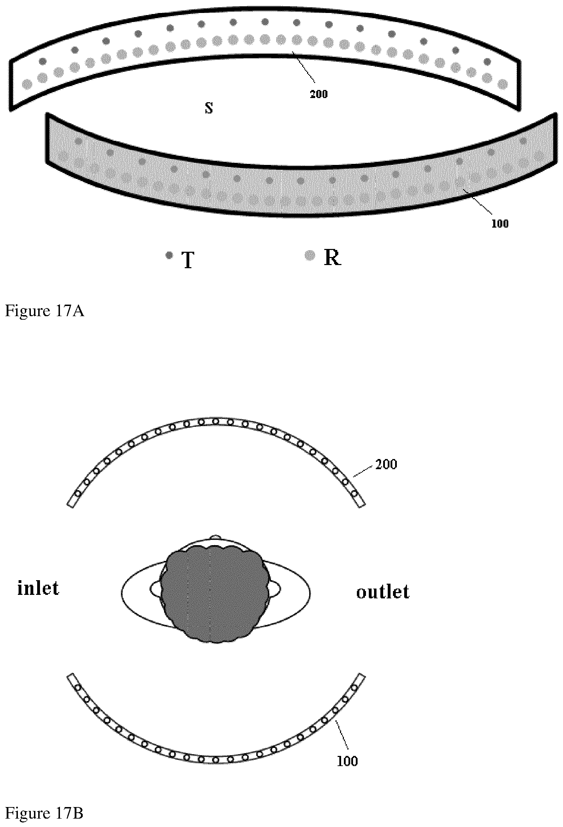

According to an embodiment of the present disclosure, similar to the foregoing embodiments (for example, as in FIGs. 4-11), except that the transmitting antennas arranged along the first row and the receiving antennas arranged along the second row are disposed along a first arc and a second arc, respectively, as shown in Figures 15, 17A and 17B; in other words, the transmitting antennas arranged along the first row and the receiving antennas arranged along the second row are arranged in a curved surface, and the two rows are parallel to each other, in which, however, the transmitting antennas and the receiving antennas are arranged along arcs, respectively. The implementation of the transmitting antennas and the receiving antennas arranged along the arcs will be described below.

A linear array is bent into a circular arc with a radius of R, and a value of R ranges from 0.5 m to 1 m. A bending process is shown in Figure 15. For an array arranged along an arc, the imaging condition, relative to a linear array, is that a difference e between an arc length and a chord length h, corresponding to the maximum value of an interval between two adjacent transmitting antennas or two adjacent receiving antennas that are arranged along the arc tends to 0, as shown in Figure 16.

$$e = l - h = R\left(\theta - 2\sin\left(\frac{\theta}{2}\right)\right)$$

where $\theta$ is a central angle corresponding to the arc and R is a radius of the arc. The following relationship is satisfied,

$$h = R2\sin\left(\frac{\theta}{2}\right)$$

When $\theta \ll 1$, $2\sin\left(\frac{\theta}{2}\right)$ is expanded as a Taylor series

$$2\sin\left(\frac{\theta}{2}\right) = \theta\left(1 + \frac{\theta^2}{24}\right) + O(\theta)$$

Where, $O(\theta)$ is a high-order term.

The difference e can be expressed as,

$$e \sim R\frac{\theta^2}{24}$$

All of the array structures listed above in Figure 4-10 can be implemented to obtain $e \sim 0$. For example, as shown in FIG. 6A and FIG. 7, one transmitting antenna corresponds to eight receiving antennas, and two adjacent ones of the transmitting antennas are spaced apart from each other by $4\lambda$. It is assume that if $\lambda=4$mm and an arc of radius R=500mm is obtained by bending, e= $2.22\times10^{-5}$m. Figures 6A and 7 are simplistically shown in which the transmitting antennas and the receiving antennas are arranged in a straight line, and however in fact, in the present embodiment, the transmitting antennas and the receiving antennas are arranged in an arc. The arrangements in Figs. 8A to 11 are also modified according to the present embodiment such that the transmitting antennas and the receiving antennas are arranged in an arc. The arrangement and operation of these transmitting antennas and receiving antennas are similar to those of the previous embodiments.

The pitch dtr of TR can be any value such that, on the one hand, the transmitting antenna and receiving antenna array can be placed, making a mutual coupling small, and on the other hand, it is required that dtr/z0< 10%, where z0 is the imaging distance.

It can be seen that for an array structure with a macroscopic length of 1 m, the imaging principles of an array structure arranged in an arc is similar to that of an array structure arranged in a straight line. In other embodiments of the present disclosure, for convenience, the transmitting antennas and the receiving antennas are illustrated in the arrangement in a straight line. It should be understood that these transmitting antennas and the receiving antennas are arranged in an arc shape. Or simply, the sparse transmitting antenna and receiving antenna array arrangement of the present disclosure may first be arranged in a straight line and then be curved into an arc.

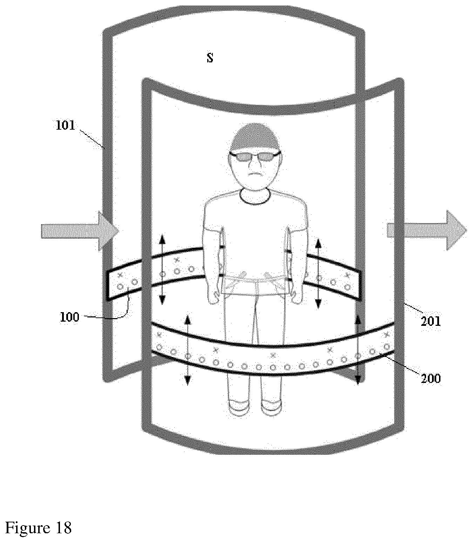

In an embodiment of the present disclosure, there is also provided a human body security inspection apparatus, including one or more above-described sparse multiple transmitting and multiple receiving antenna array arrangements. FIG. 18 is a schematic diagram of a human body security inspection apparatus including a first sparse multiple transmitting and multiple receiving antenna array arrangement 100 and a second sparse multiple transmitting and multiple receiving antenna array arrangement 200, wherein the first sparse multiple transmitting and multiple receiving antenna array arrangement 100 and the second sparse multiple transmitting and multiple receiving antenna array arrangement 200 are respectively arranged along curved surfaces and disposed oppositely to define an inspection space S for performing human body security inspection between the two. The first sparse multiple transmitting and multiple receiving antenna array arrangement 100 and the second sparse multiple transmitting and multiple receiving antenna array arrangement 200 are configured to be translatable in an up-down direction in a vertical plane to perform scans in a vertical plane respectively. For example, the first sparse multiple transmitting and multiple receiving antenna array arrangement 100 scans from top to bottom in its vertical plane, and the second sparse multiple transmitting and multiple receiving antenna array arrangement 200 scans from bottom to top in its vertical plane. It should be noted that due to the curved design, a human body security inspection may be also completed by only one the first sparse multiple transmitting and multiple receiving antenna array arrangement 100.

After completing the scan of the whole human body, a complete scattering field data is obtained and sent to the data processing unit, and reconstructed by using a holographic algorithm to form an image of the inspected human body. Finally, the image is transmitted to, for example, a display unit to be displayed for viewing by the operator.

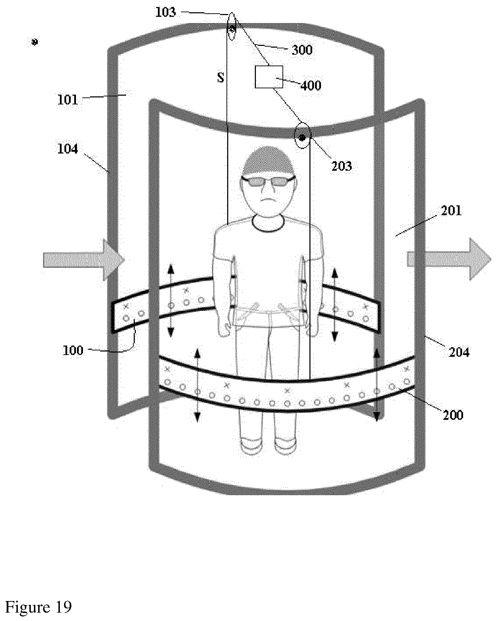

In another embodiment, as shown in FIG. 19, the human body security inspection apparatus includes a first frame 101, on which a first sparse multiple transmitting and multiple receiving antenna array arrangement 100 arranged along a curved surface is arranged and movable up and down, and a second frame 201, on which a second sparse multiple transmitting and multiple receiving antenna array arrangement 200 arranged along a curved surface is arranged and movable up and down..

In another embodiment, as shown in FIG. 19, a first rail device 104 may be disposed on the first frame 101, and the first sparse multiple transmitting and multiple receiving antenna array arrangement 100 arranged along the curved surface is slidably coupled to and thus movable along the first rail device 104 to perform a first scan of an object (human body) to be inspected; a second rail device 204 may be disposed on the second frame 201, and the second sparse multiple transmitting and multiple receiving antenna array arrangement 200 arranged along the curved surface is slidably coupled to and thus movable along the second rail device 204 to perform a second scan of the object (human body) to be inspected. The first rail device 104 and the second rail device 204 may be parallel to each other.

The human body security inspection apparatus may include a drive device 400 for driving the first sparse multiple transmitting and multiple receiving antenna array arrangement 100 to move along the first rail device 104 and/or drive the second sparse multiple transmitting and multiple receiving antenna array arrangement 200 to move along the second rail device 204. The human body security inspection apparatus may further include a constraint device for constraining a motion relationship between the first sparse multiple transmitting and multiple receiving antenna array arrangement 100 and the second sparse multiple transmitting and multiple receiving antenna array arrangement 200 such that they can move only in opposite directions. In one embodiment, the constraint device constrains a positional relationship between the first sparse multiple transmitting and multiple receiving antenna array arrangement 100 and the second sparse multiple transmitting and multiple receiving antenna array arrangement 200 such that they can move only at an equal speed. In particular, the constraint device is a rigid connecting strip 300 connecting the first sparse multiple transmitting and multiple receiving antenna array arrangement 100 and the second sparse multiple transmitting and multiple receiving antenna array arrangement 200. The first rail device 104 is provided with a first fixed pulley 103, and the second rail device 204 is provided with a second fixed pulley 203, and the connecting strip passes from the first sparse multiple transmitting and multiple receiving antenna array arrangement 100, through the first fixed pulley 103 and the second fixed pulley 203 in sequence, to be connected to the second sparse multiple transmitting and multiple receiving antenna array arrangement 200.

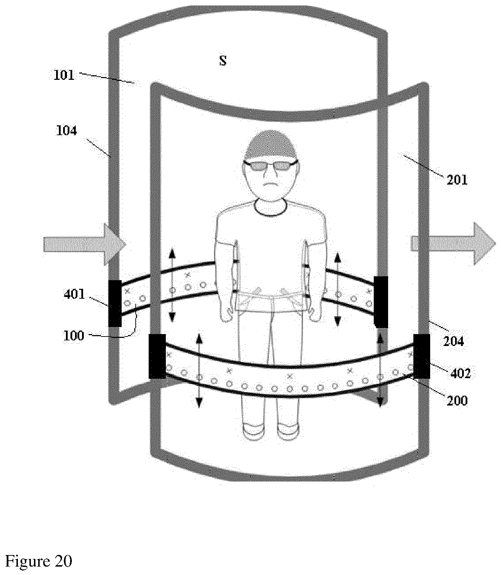

In another embodiment, as shown in FIG. 20, the human body security inspection apparatus includes a first frame 101, on which the first sparse multiple transmitting and multiple receiving antenna array arrangement 100 arranged along the curved surface is arranged and movable up and down, and a second frame 201 on which the second sparse multiple transmitting and multiple receiving antenna array arrangement 200 arranged along the curved surface is arranged and movable up and down. A first rail device 104 may be disposed on the first frame 101, and the first sparse multiple transmitting and multiple receiving antenna array arrangement 100 is slidably coupled to and thus movable along the first rail device 104 to perform a first scan on an object (a human body) to be inspected; and a second rail device 204 may be disposed on the second frame 201, and the second sparse multiple transmitting and multiple receiving antenna array arrangement 200 is slidably coupled to and thus movable along the second rail device 204 to perform a second scan on the object (the human body) to be inspected. The drive device includes a first drive device 401 that directly drives the first sparse multiple transmitting and multiple receiving antenna array arrangement 100 and the first sparse multiple transmitting and multiple receiving antenna array arrangement 100 is coupled to the first rail device 104 by the first drive device 401. The drive device includes a second drive device 402 that directly drives the second sparse multiple transmitting and multiple receiving antenna array arrangement 200 and the second sparse multiple transmitting and multiple receiving antenna array arrangement 200 is coupled to the second rail device 204 by the second drive device. With this arrangement, the first sparse multiple transmitting and multiple receiving antenna array arrangement 100 and the second sparse multiple transmitting and multiple receiving antenna array arrangement 200 can be independently controlled, for example, they can be moved in a same direction or in opposite directions, at a same moving speed or different moving speeds. In the present embodiment, the constraint device such as the first pulley and the second pulley and the rigid connecting strip 300 may be not provided.

In the whole process of scanning the object to be inspected by the first sparse multiple transmitting and multiple receiving antenna array arrangement 100 and the second sparse multiple transmitting and multiple receiving antenna array arrangement 200, they can transmit millimeter waves at different times. For example, when the scans are started, the first sparse multiple transmitting and multiple receiving antenna array arrangement 100 transmits millimeter waves from the lowest frequency to the highest frequency, and the second sparse multiple transmitting and multiple receiving antenna array arrangement 200 transmits millimeter waves from the highest frequency to the lowest frequency; or the second sparse multiple transmitting and multiple receiving antenna array arrangement 200 transmits millimeter waves from the lowest frequency to the highest frequency, and the first sparse multiple transmitting and multiple receiving antenna array arrangement 100 transmits millimeter waves from the highest frequency to the lowest frequency. In this embodiment, the first sparse multiple transmitting and multiple receiving antenna array arrangement 100 and the second sparse multiple transmitting and multiple receiving antenna array arrangement 200 can individually scan, and the scan signals of the two may be used to form an image of the human body.

The human body security inspection apparatus according to the embodiment of the present disclosure further includes a processor or a controller configured for controlling the drive device to perform the scanning operation, and also configured for processing the received millimeter wave signals to process the millimeter wave echo signals of the first sparse multiple transmitting and multiple receiving antenna array arrangement 100 and the second sparse multiple transmitting and multiple receiving antenna array arrangement 200 to form an image of the human body surface, and further configured for receiving externally inputted instructions, etc..

When the human body security inspection apparatus of the present disclosure is used to perform security inspection on a human body such as a passenger, it is only needed that the human body stays in the human body security inspection apparatus, that is, between the first sparse multiple transmitting and multiple receiving antenna array arrangement 100 and the second sparse multiple transmitting and multiple receiving antenna array arrangement 200. Then, the first sparse multiple transmitting and multiple receiving antenna array arrangement 100 and the second sparse multiple transmitting and multiple receiving antenna array arrangement 200 simultaneously scan or separately scan a side of the human body, and the signals obtained by scanning are transmitted to the processor or controller for image processing to form the image of the human body, completing a convenient, quick and easy inspection.

In an embodiment of the present disclosure, there is also provided a method of performing inspection on a human body using the sparse multiple transmitting and multiple receiving antenna array arrangement as described above.

Although some embodiments of the present general inventive concept have been shown and described, it will be understood by those of ordinary skill in the art that modifications may be made to these embodiments without departing from the principles of the present general inventive concept. The scope of the disclosed invention is defined by the appended claims.

**Claims**

1.  A sparse multiple transmitting and multiple receiving antenna array arrangement (100, 200) for an active millimeter wave security inspection imaging, comprising a set of transmitting antennas for transmitting millimeter waves and a set of receiving antennas for receiving millimeter waves transmitted by the set of transmitting antennas and reflected by a human body;

    wherein the set of transmitting antennas comprises a plurality of transmitting antennas arranged along a first row, the set of receiving antennas comprises a plurality of receiving antennas arranged along a second row, the first row of transmitting antennas of the set of transmitting antennas are arranged in parallel with the second row of receiving antennas of the set of receiving antennas, and the first row of transmitting antennas are spaced apart from and located in a same plane as the second row of receiving antennas;
    wherein at least one of the receiving antennas is arranged within a range, equal to a length of an interval between two adjacent ones of the transmitting antennas arranged along the first row, in the second row of receiving antennas such that the number of the transmitting antennas is less than the number of the receiving antennas;
    wherein the plurality of transmitting antennas of the set of transmitting antennas arranged along the first row sequentially are configured to transmit the millimeter waves one by one to complete a one-dimensional scan of the set of transmitting antennas,
    wherein the array arrangement is configured to displace in a direction orthogonal to a row direction of the set of transmitting antennas to perform a two-dimensional scan of the human body to obtain data for imaging;
    wherein an interval between two adjacent ones of the transmitting antennas arranged along the first row is greater than one times a wavelength of the radiation wave, and an interval between two adjacent ones of the plurality of receiving antennas arranged along the second row is not less than one times the wavelength of the radiation wave such that a total number of the transmitting antennas and the receiving antennas is reduced relative to a total number of the transmitting antennas and the receiving antennas where the transmitting antennas and the receiving antennas are arranged in pairs and the transmitting antenna and the receiving antenna pairs are spaced apart from each other by one times the wavelength of the radiant wave,
    **characterized in that** the interval between two adjacent ones of the transmitting antennas is greater than the interval between two adjacent ones of the receiving antennas.

2.  The sparse multiple transmitting and multiple receiving antenna array arrangement (100, 200) as claimed in claim 1, wherein at least one of the transmitting antennas is aligned with at least one of the receiving antennas such that a line connected between the two is perpendicular to a row direction of the transmitting antennas or the receiving antennas; or
    a line connecting any one of the transmitting antennas to any one of the receiving antennas is not perpendicular to the row direction of the transmitting antennas or the receiving antennas.

3.  The sparse multiple transmitting and multiple receiving antenna array arrangement (100, 200) as claimed in claim 1, wherein a midpoint of a line connecting one of the set of transmitting antennas and one of corresponding receiving antennas, closest to the one transmitting antenna, of the set of receiving antennas is regarded as a virtual equivalent phase center of the transmitting antenna-receiving antenna pair and a distance between two adjacent equivalent phase centers is 0.3 to 0.7 times, preferably a half of, the wavelength of the radiation wave.

4.  The sparse multiple transmitting and multiple receiving antenna array arrangement (100, 200) as claimed in claim 1, further comprising a control switch for controlling the set of transmitting antennas to sequentially transmit the millimeter waves.

5.  The sparse multiple transmitting and multiple receiving antenna array arrangement (100, 200) as claimed in claim 1, wherein the equivalent phase centers determined by adjacent ones of the transmitting antennas together with respective ones of the receiving antennas do not overlap with each other; and
    the equivalent phase centers of the transmitting antenna-receiving antenna pairs are sequentially arranged in a row, or at least some of the equivalent phase centers of the adjacent pairs of the transmitting antenna-receiving antennas are alternately arranged in a row.

6.  The sparse multiple transmitting and multiple receiving antenna array arrangement (100, 200) as claimed in claim 1,

    wherein the sparse multiple transmitting and multiple receiving antenna array arrangement comprises a plurality of segments, wherein an angle is formed between two adjacent ones of the segments;

the set of transmitting antennas and the set of receiving antennas respectively include ones that are respectively disposed in the plurality of segments.

7. The sparse multiple transmitting and multiple receiving antenna array arrangement (100, 200) as claimed in claim 6, wherein the sparse multiple transmitting and multiple receiving antenna array arrangement comprises a first segment disposed in a first vertical plane; and a second segment disposed in a second vertical plane, wherein an angle $\theta_{12}$ included between the first vertical plane and the second vertical plane is not zero; the set of transmitting antennas and the set of receiving antennas respectively include ones arranged in the first segment and ones arranged in the second segment.

8. The sparse multiple transmitting and multiple receiving antenna array arrangement (100, 200) as claimed in claim 7, wherein the sparse multiple transmitting and multiple receiving antenna array arrangement further comprises a third segment disposed in a third vertical plane, angles between the third vertical plane and, the first vertical plane and the second vertical plane are $\theta_{13}$ and $\theta_{23}$, respectively, and are not zero; the set of transmitting antennas and the set of receiving antennas respectively include ones disposed in the third segment.

9. A human body security inspection apparatus comprising a first sparse multiple transmitting and multiple receiving antenna array arrangement (100) as claimed in any one of claims 1-8 and a second sparse multiple transmitting and multiple receiving antenna array arrangement (200) as claimed in any one of claims 1-8;

   wherein the first sparse multiple transmitting and multiple receiving antenna array arrangement (100) and the second sparse multiple transmitting and multiple receiving antenna array arrangement (200) are arranged opposite to each other so as to define an inspection space for performing a human body security inspection therebetween, and are also configured to be capable of translating in an up-down direction in a vertical plane to perform a scan.
   wherein the human body security inspection apparatus further comprises:

   a first frame (101), the first sparse multiple transmitting and multiple receiving antenna array arrangement (100) is arranged on the first frame (101) to be movable up and down on the first frame (101); and
   a second frame (201), the second sparse multiple transmitting and multiple receiving antenna array arrangement (200) is arranged on the second frame (201) to be movable up and down on the second frame (201);
   wherein a first rail device (104) is disposed on the first frame (101), and the first sparse multiple transmitting and multiple receiving antenna array arrangement (100) is slidably coupled to the first rail device (104) so as to be movable along the first rail device (104) to perform a first scan on the human body; a second rail device (204) is disposed on the second frame (201), and the second sparse multiple transmitting and multiple receiving antenna array arrangement (200) is slidably coupled to the second rail device (204) to be movable along the second rail device (204) to perform a second scan on the human body;
   a first drive device (401) directly driving the first sparse multiple transmitting and multiple receiving antenna array arrangement (100), the first sparse multiple transmitting and multiple receiving antenna array arrangement (100) being coupled to the first rail device (104) through the first drive device (401); and, a second drive device (402) directly driving the second sparse multiple transmitting and multiple receiving antenna array arrangement (200), the second sparse multiple transmitting and multiple receiving antenna array arrangement (200) being coupled to the second rail device (204) through the second drive device (402);
   a constraint device, configured to constrain a motion relationship between the first sparse multiple transmitting and multiple receiving antenna array arrangement (100) and the second sparse multiple transmitting and multiple receiving antenna array arrangement (200) to cause them to be able to move only in the opposite directions,
   wherein the constraint device is a rigid connecting strip (300) that connects the first sparse multiple transmitting and multiple receiving antenna array arrangement (100) and the second sparse multiple transmitting and multiple receiving antenna array arrangement (200);
   wherein the first rail device (104) is provided with a first fixed pulley (103), the second rail device (204) is provided with a second fixed pulley (203), and the connecting strip passes from the first sparse multiple transmitting and multiple receiving antenna array arrangement (100), through the first fixed pulley (103) and the second fixed pulley (203), to be connected to the second sparse multiple transmitting and multiple receiving antenna array arrangement (200).

**Patentansprüche**

1. Spärliche-Mehrfachsende- und -Mehrfachempfangsantennenarray-Anordnung (100, 200) für eine aktive Millimeterwellen-Sicherheitsinspektionsbildgebung, umfassend einen Satz von Sendeantennen zum Senden von Millimeterwellen und einen Satz von Empfangsantennen zum Empfangen von Millimeterwellen, die durch den Satz von Sendeantennen gesendet und durch einen menschlichen Körper reflektiert werden;

   wobei der Satz von Sendeantennen mehrere Sendeantennen umfasst, die entlang einer ersten Reihe angeordnet sind, der Satz von Empfangsantennen mehrere Empfangsantennen umfasst, die entlang einer zweiten Reihe angeordnet sind, die erste Reihe von Sendeantennen des Satzes von Sendeantennen parallel zu der zweiten Reihe von Empfangsantennen des Satzes von Empfangsantennen angeordnet ist und die erste Reihe von Sendeantennen von der zweiten Reihe von Empfangsantennen beabstandet ist und sich in derselben Ebene wie diese befindet;
   wobei mindestens eine der Empfangsantennen innerhalb eines Bereichs, der gleich einer Länge eines Intervalls zwischen zwei benachbarten der entlang der ersten Reihe angeordneten Sendeantennen ist, in der zweiten Reihe von Empfangsantennen so angeordnet ist, dass die Anzahl der Sendeantennen geringer ist als die Anzahl der Empfangsantennen;
   wobei die mehreren Sendeantennen des Satzes von Sendeantennen, die sequentiell entlang der ersten Reihe angeordnet sind, dafür eingerichtet sind, die Millimeterwellen nacheinander zu senden, um einen eindimensionalen Scan des Satzes von Sendeantennen zu vollenden,
   wobei die Array-Anordnung dafür eingerichtet ist, sich in einer Richtung orthogonal zu einer Reihenrichtung des Satzes von Sendeantennen zu verschieben, um einen zweidimensionalen Scan des menschlichen Körpers durchzuführen, um Daten für die Bildgebung zu erhalten;
   wobei ein Intervall zwischen zwei benachbarten der Sendeantennen, die entlang der ersten Reihe angeordnet sind, größer ist als das Einfache einer Wellenlänge der Strahlungswelle, und ein Intervall zwischen zwei benachbarten der mehreren Empfangsantennen, die entlang der zweiten Reihe angeordnet sind, nicht kleiner als das Einfache der Wellenlänge der Strahlungswelle ist, dergestalt, dass eine Gesamtanzahl der Sendeantennen und der Empfangsantennen relativ zu einer Gesamtanzahl der Sendeantennen und der Empfangsantennen reduziert ist, wobei die Sendeantennen und die Empfangsantennen in Paaren angeordnet sind und die Sendeantennen- und die Empfangsantennen-Paare um das Einfache der Wellenlänge der Strahlungswelle voneinander beabstandet sind, **dadurch gekennzeichnet, dass** das Intervall zwischen zwei benachbarten der Sendeantennen größer ist als das Intervall zwischen zwei benachbarten der Empfangsantennen.

2. Spärliche-Mehrfachsende- und -Mehrfachempfangsantennenarray-Anordnung (100, 200) nach Anspruch 1, wobei mindestens eine der Sendeantennen auf mindestens einer der Empfangsantennen so ausgerichtet ist, dass eine zwischen den beiden verbundene Linie senkrecht zu einer Reihenrichtung der Sendeantennen oder der Empfangsantennen verläuft; oder eine Linie, die eine beliebige der Sendeantennen mit einer beliebige der Empfangsantennen verbindet, nicht senkrecht zu der Reihenrichtung der Sendeantennen oder der Empfangsantennen verläuft.

3. Spärliche-Mehrfachsende- und -Mehrfachempfangsantennenarray-Anordnung (100, 200) nach Anspruch 1, wobei ein Mittelpunkt einer Linie, die eine des Satzes von Sendeantennen und eine von entsprechenden Empfangsantennen, die der einen Sendeantenne am nächsten liegt, des Satzes von Empfangsantennen verbindet, als ein virtuelles äquivalentes Phasenzentrum des Sendeantennen-Empfangsantennen-Paares angesehen wird und eine Distanz zwischen zwei benachbarten äquivalenten Phasenzentren das 0,3- bis 0,7-Fache, bevorzugt die Hälfte, der Wellenlänge der Strahlungswelle beträgt.

4. Spärliche-Mehrfachsende- und -Mehrfachempfangsantennenarray-Anordnung (100, 200) nach Anspruch 1, des Weiteren umfassend einen Steuerschalter zum Steuern des Satzes von Sendeantennen zum sequentiellen Senden der Millimeterwellen.

5. Spärliche-Mehrfachsende- und -Mehrfachempfangsantennenarray-Anordnung (100, 200) nach Anspruch 1, wobei die äquivalenten Phasenzentren, die durch benachbarte der Sendeantennen zusammen mit jeweiligen der Empfangsantennen bestimmt werden, einander nicht überlappen; und die äquivalenten Phasenzentren der Sendeantennen-Empfangsantennen-Paare nacheinander in einer Reihe angeordnet sind oder mindestens einige der äquivalenten Phasenzentren der benachbarten Paare der Sendeantennen-Empfangsantennen abwechselnd in einer Reihe angeordnet sind.

6. Spärliche-Mehrfachsende- und

   -Mehrfachempfangsantennenarray-Anordnung (100, 200) nach Anspruch 1,
   wobei die Spärliche-Mehrfachsende- und
   -Mehrfachempfangsantennenarray-Anordnung mehrere Segmente umfasst, wobei ein Winkel zwischen zwei benachbarten der Segmente gebildet ist;

   der Satz von Sendeantennen und der Satz von Empfangsantennen jeweils solche enthalten, die jeweils in den mehreren Segmenten angeordnet sind.

7. Spärliche-Mehrfachsende- und

   -Mehrfachempfangsantennenarray-Anordnung (100, 200) nach Anspruch 6, wobei die Spärliche-Mehrfachsende- und
   -Mehrfachempfangsantennenarray-Anordnung ein erstes Segment, das in einer ersten vertikalen Ebene angeordnet ist; und ein zweites Segment, das in einer zweiten vertikalen Ebene angeordnet ist, umfasst, wobei ein Winkel $\theta_{12}$, der zwischen der ersten vertikalen Ebene und der zweiten vertikalen Ebene eingeschlossen ist, nicht null ist; wobei der Satz von Sendeantennen und der Satz von Empfangsantennen jeweils solche, die in dem ersten Segment angeordnet sind, und solche, die in dem zweiten Segment angeordnet sind, enthalten.

8. Spärliche-Mehrfachsende- und

   -Mehrfachempfangsantennenarray-Anordnung (100, 200) nach Anspruch 7, wobei die Spärliche-Mehrfachsende- und
   -Mehrfachempfangsantennenarray-Anordnung des Weiteren ein drittes Segment umfasst, das in einer dritten vertikalen Ebene angeordnet ist, wobei Winkel zwischen der dritten vertikalen Ebene und der ersten vertikalen Ebene und der zweiten vertikalen Ebene $\theta_{13}$ bzw. $\theta_{23}$ betragen und nicht null sind; wobei der Satz von Sendeantennen und der Satz von Empfangsantennen jeweils solche umfassen, die in dem dritten Segment angeordnet sind.

9. Sicherheitsinspektionsvorrichtung für einen menschlichen Körper, umfassend eine erste Spärliche-Mehrfachsende- und

   -Mehrfachempfangsantennenarray-Anordnung (100) nach einem der Ansprüche 1-8 und eine zweite Spärliche-Mehrfachsende- und -Mehrfachempfangsantennenarray-Anordnung (200) nach einem der Ansprüche 1-8;
   wobei die erste Spärliche-Mehrfachsende- und
   -Mehrfachempfangsantennenarray-Anordnung (100) und die zweite Spärliche-Mehrfachsende- und
   -Mehrfachempfangsantennenarray-Anordnung (200) einander gegenüberliegend angeordnet sind, um dazwischen einen Inspektionsraum zum Durchführen einer Sicherheitsinspektion eines menschlichen Körpers zu definieren, und auch dafür eingerichtet sind, in der Lage zu sein, sich in einer Aufwärts-Abwärts-Richtung in einer vertikalen Ebene zu verschieben, um einen Scan durchzuführen,
   wobei die Sicherheitsinspektionsvorrichtung für einen menschlichen Körper des Weiteren umfasst:

   einen ersten Rahmen (101), wobei die erste Spärliche-Mehrfachsende- und -Mehrfachempfangsantennenarray-Anordnung (100) an dem ersten Rahmen (101) so angeordnet ist, dass sie an dem ersten Rahmen (101) aufwärts und abwärts beweglich ist; und
   einen zweiten Rahmen (201), wobei die zweite Spärliche-Mehrfachsende- und -Mehrfachempfangsantennenarray-Anordnung (200) an dem zweiten Rahmen (201) so angeordnet ist, dass sie an dem zweiten Rahmen (201) aufwärts und abwärts beweglich ist; und
   wobei eine erste Schienenvorrichtung (104) an dem ersten Rahmen (101) angeordnet ist und die erste Spärliche-Mehrfachsende- und -Mehrfachempfangsantennenarray-Anordnung (100) gleitfähig mit der ersten Schienenvorrichtung (104) gekoppelt ist, um entlang der ersten Schienenvorrichtung (104) beweglich zu sein, um einen ersten Scan an einem menschlichen Körper durchzuführen; eine zweite Schienenvorrichtung (204) an dem zweiten Rahmen (201) angeordnet ist, und die zweite Spärliche-Mehrfachsende- und

   -Mehrfachempfangsantennenarray-Anordnung (200) gleitfähig mit der zweiten Schienenvorrichtung (204) gekoppelt ist, um entlang der zweiten Schienenvorrichtung (204) beweglich zu sein, um einen zweiten Scan an dem menschlichen Körper durchzuführen;
eine erste Antriebsvorrichtung (401), die die erste Spärliche-Mehrfachsende- und -Mehrfachempfangsantennenarray-Anordnung (100) direkt antreibt, wobei die erste Spärliche-Mehrfachsende- und -Mehrfachempfangsantennenarray-Anordnung (100) über die erste Antriebsvorrichtung (401) mit der ersten Schienenvorrichtung (104) gekoppelt ist; und eine zweite Antriebsvorrichtung (402), die die zweite Spärliche-Mehrfachsende- und -Mehrfachempfangsantennenarray-Anordnung (200) direkt antreibt, wobei die zweite Spärliche-Mehrfachsende- und -Mehrfachempfangsantennenarray-Anordnung (200) über die zweite Antriebsvorrichtung (402) mit der zweiten Schienenvorrichtung (204) gekoppelt ist;

eine Beschränkungsvorrichtung, die dazu eingerichtet ist,
eine Bewegungsbeziehung zwischen der ersten Spärliche-Mehrfachsende- und -Mehrfachempfangsantennenarray-Anordnung (100) und der zweiten Spärliche-Mehrfachsende- und -Mehrfachempfangsantennenarray-Anordnung (200) zu beschränken, um zu bewirken, dass sie nur in den entgegengesetzten Richtungen beweglich sind,
wobei die Beschränkungsvorrichtung ein starrer Verbindungsstreifen (300) ist, der die erste Spärliche-Mehrfachsende- und -Mehrfachempfangsantennenarray-Anordnung (100) und die zweite Spärliche-Mehrfachsende- und -Mehrfachempfangsantennenarray-Anordnung (200) verbindet;
wobei die erste Schienenvorrichtung (104) mit einer ersten festen Seilscheibe (103) versehen ist, die zweite Schienenvorrichtung (204) mit einer zweiten festen Seilscheibe (203) versehen ist, und der Verbindungsstreifen von der ersten Spärliche-Mehrfachsende- und -Mehrfachempfangsantennenarray-Anordnung (100) über die erste feste Seilscheibe (103) und die zweite feste Seilscheibe (203) verläuft, um mit der zweiten Spärliche-Mehrfachsende- und

-Mehrfachempfangsantennenarray-Anordnung verbunden zu sein.

## Revendications

1. Agencement de réseau d'antennes d'émission multiples et de réception multiples lacunaire (100, 200) pour une imagerie d'inspection de sécurité à ondes millimétriques actives, comprenant un ensemble d'antennes d'émission pour émettre des ondes millimétriques et un ensemble d'antennes de réception pour recevoir des ondes millimétriques transmises par l'ensemble d'antennes d'émission et réfléchies par un corps humain ;

dans lequel l'ensemble d'antennes d'émission comprend une pluralité d'antennes d'émission disposées le long d'une première rangée, l'ensemble d'antennes de réception comprend une pluralité d'antennes de réception disposées le long d'une seconde rangée, la première rangée d'antennes d'émission de l'ensemble d'antennes d'émission est disposée parallèlement à la seconde rangée d'antennes de réception de l'ensemble d'antennes de réception, et la première rangée d'antennes d'émission est espacée de la seconde rangée d'antennes de réception et située dans le même plan qu'elle ;
dans lequel au moins une des antennes de réception est disposée dans une plage, égale à une longueur d'intervalle entre deux antennes adjacentes parmi les antennes d'émission disposées le long de la première rangée, dans la seconde rangée d'antennes de réception de telle sorte que le nombre d'antennes d'émission est inférieur au nombre d'antennes de réception ;
dans lequel la pluralité d'antennes d'émission de l'ensemble d'antennes d'émission disposées le long de la première rangée de manière séquentielle sont configurées pour transmettre les ondes millimétriques une par une afin de réaliser un balayage unidimensionnel de l'ensemble d'antennes d'émission,
dans lequel l'agencement de réseau est configuré pour se déplacer dans une direction orthogonale à une direction de rangée de l'ensemble d'antennes d'émission pour effectuer un balayage bidimensionnel du corps humain pour obtenir des données pour l'imagerie ;
dans lequel un intervalle entre deux antennes adjacentes parmi les antennes d'émission disposées le long de la première rangée est supérieur à une fois la longueur d'onde de l'onde de rayonnement, et un intervalle entre deux antennes adjacentes de la pluralité d'antennes de réception disposées le long de la seconde rangée n'est pas inférieur à une fois la longueur d'onde de l'onde de rayonnement, de telle sorte qu'un nombre total des antennes d'émission et des antennes de réception est réduit par rapport à un nombre total des antennes d'émission et des antennes de réception où les antennes d'émission et les antennes de réception sont disposées par paires et les paires d'antennes d'émission et d'antennes de réception sont espacées les unes des autres d'une fois la longueur d'onde de l'onde rayonnante, **caractérisé en ce que** l'intervalle entre deux antennes adjacentes parmi les antennes d'émission est supérieur à l'intervalle entre deux antennes adjacentes parmi les antennes de réception.

2. Agencement de réseau d'antennes d'émission multiples et de réception multiples lacunaire (100, 200) selon la revendication 1, dans lequel au moins une des antennes d'émission est alignée avec au moins une des antennes de réception de telle sorte qu'une ligne connectée entre les deux soit perpendiculaire à une direction de rangée des antennes d'émission ou des antennes de réception ; ou une ligne reliant l'une quelconque des antennes d'émission à l'une quelconque des antennes de réception n'est pas perpendiculaire à la direction de rangée des antennes d'émission ou des antennes de réception.

3. Agencement de réseau d'antennes d'émission multiples et de réception multiples lacunaire (100, 200) selon la revendication 1, dans lequel un point médian d'une ligne reliant l'une de l'ensemble d'antennes d'émission et l'une des antennes de réception correspondantes, le plus proche de l'une antenne d'émission, de l'ensemble d'antennes de réception est considéré comme un centre de phase équivalent virtuel de la paire antenne d'émission-antenne de réception et une distance entre deux centres de phase équivalents adjacents est de 0,3 à 0,7 fois, de préférence la moitié de la longueur d'onde de l'onde de rayonnement.

4. Agencement de réseau d'antennes d'émission multiples et de réception multiples lacunaire (100, 200) selon la revendication 1, comprenant en outre un commutateur de commande pour commander l'ensemble d'antennes d'émission pour transmettre séquentiellement les ondes millimétriques.

5. Agencement de réseau d'antennes d'émission multiples et de réception multiples lacunaire (100, 200) selon la revendication 1, dans lequel les centres de phase équivalents déterminés par des antennes adjacentes parmi les antennes d'émission ainsi que par des antennes respectives parmi les antennes de réception ne se chevauchent pas ; et
les centres de phase équivalents des paires antenne d'émission-antenne de réception sont disposés séquentiellement dans une rangée, ou au moins certains des centres de phase équivalents des paires adjacentes des antennes d'émission-antennes de réception sont disposés en alternance dans une rangée.

6. Agencement de réseau d'antennes d'émission multiples et de réception multiples lacunaire (100, 200) selon la revendication 1,

   dans lequel l'agencement de réseau d'antennes d'émission multiples et de réception multiples lacunaire comprend une pluralité de segments, dans lequel un angle est formé entre deux segments adjacents parmi les segments ;
   l'ensemble d'antennes d'émission et l'ensemble d'antennes de réception incluent respectivement celles qui sont disposées respectivement dans la pluralité de segments.

7. Agencement de réseau d'antennes d'émission multiples et de réception multiples lacunaire (100, 200) selon la revendication 6, dans lequel l'agencement de réseau d'antennes d'émission multiples et de réception multiples lacunaire comprend un premier segment disposé dans un premier plan vertical ; et un deuxième segment disposé dans un deuxième plan vertical, dans lequel un angle $\theta_{12}$ inclus entre le premier plan vertical et le deuxième plan vertical n'est pas nul ; l'ensemble d'antennes d'émission et l'ensemble d'antennes de réception incluent respectivement celles disposées dans le premier segment et celles disposées dans le deuxième segment.

8. Agencement de réseau d'antennes d'émission multiples et de réception multiples lacunaire (100, 200) selon la revendication 7, dans lequel l'agencement de réseau d'antennes d'émission multiples et de réception multiples lacunaire comprend en outre un troisième segment disposé dans un troisième plan vertical, des angles entre le troisième plan vertical et, le premier plan vertical et le deuxième plan vertical sont respectivement $\theta_{13}$ et $\theta_{23}$ et ne sont pas nuls ; l'ensemble d'antennes d'émission et l'ensemble d'antennes de réception incluent respectivement celles disposées dans le troisième segment.

9. Appareil d'inspection de sécurité du corps humain comprenant un premier agencement de réseau d'antennes d'émission multiples et de réception multiples lacunaire (100) selon l'une quelconque des revendications 1 à 8 et un second agencement de réseau d'antennes d'émission multiples et de réception multiples lacunaire (200) selon l'une quelconque des revendications 1 à 8 ;

dans lequel le premier agencement de réseau d'antennes d'émission multiples et de réception multiples lacunaire (100) et le second agencement de réseau d'antennes d'émission multiples et de réception multiples lacunaire (200) sont disposés à l'opposé l'un de l'autre de manière à définir un espace d'inspection pour effectuer une inspection de sécurité du corps humain entre eux, et sont également configurés pour pouvoir se déplacer dans une direction haut-bas dans un plan vertical pour effectuer un balayage.

dans lequel l'appareil d'inspection de sécurité du corps humain comprend en outre :

un premier cadre (101), le premier agencement de réseau d'antennes d'émission multiples et de réception multiples lacunaire (100) est disposé sur le premier cadre (101) pour être mobile vers le haut et vers le bas sur le premier cadre (101) ; et

un second cadre (201), le second agencement de réseau d'antennes d'émission multiples et de réception multiples lacunaire (200) est disposé sur le second cadre (201) pour être mobile vers le haut et vers le bas sur le second cadre (201) ;

dans lequel un premier dispositif de rail (104) est disposé sur le premier cadre (101), et le premier agencement de réseau d'antennes d'émission multiples et de réception multiples lacunaire (100) est accouplé de manière coulissante au premier dispositif de rail (104) de manière à être mobile le long du premier dispositif de rail (104) pour effectuer un premier balayage sur le corps humain ; un second dispositif de rail (204) est disposé sur le second cadre (201), et le second agencement de réseau d'antennes d'émission multiples et de réception multiples lacunaire (200) est accouplé de manière coulissante au second dispositif de rail (204) pour être mobile le long du second dispositif de rail (204) pour effectuer un second balayage sur le corps humain ;

un premier dispositif d'entraînement (401) entraînant directement le premier agencement de réseau d'antennes d'émission multiples et de réception multiples lacunaire (100), le premier agencement de réseau d'antennes d'émission multiples et de réception multiples lacunaire (100) étant accouplé au premier dispositif de rail (104) par l'intermédiaire du premier dispositif d'entraînement (401) ; et un second dispositif d'entraînement (402) entraînant directement le second agencement de réseau d'antennes d'émission multiples et de réception multiples lacunaire (200), le second agencement de réseau d'antennes d'émission multiples et de réception multiples lacunaire (200) étant accouplé au second dispositif de rail (204) par l'intermédiaire du second dispositif d'entraînement (402) ;

un dispositif de contrainte, configuré pour contraindre une relation de mouvement entre le premier agencement de réseau d'antennes d'émission multiples et de réception multiples lacunaire (100) et le second agencement de réseau d'antennes d'émission multiples et de réception multiples lacunaire (200) pour les amener à pouvoir se déplacer uniquement dans les directions opposées, dans lequel le dispositif de contrainte est une bande de liaison rigide (300) qui relie le premier agencement de réseau d'antennes d'émission multiples et de réception multiples lacunaire (100) et le second agencement de réseau d'antennes d'émission multiples et de réception multiples lacunaire (200) ;

dans lequel le premier dispositif de rail (104) est pourvu d'une première poulie fixe (103), le second dispositif de rail (204) est pourvu d'une seconde poulie fixe (203), et la bande de liaison passe à partir du premier agencement de réseau d'antennes d'émission multiples et de réception multiples lacunaire (100), à travers la première poulie fixe (103) et la seconde poulie fixe (203), pour être reliée au second agencement de réseau d'antennes d'émission multiples et de réception multiples lacunaire (200).

Figure 1

Figure 2

Figure 3

Figure 4

Figure 5

Figure 6A

Figure 6B

Figure 7A

Figure 7B

Figure 8A

Figure 8B

Figure 9A

Figure 9B

Figure 10

Figure 11

Figure 12

Figure 13

Figure 14

Figure 15

Figure 16

Figure 17A

Figure 17B

Figure 18

Figure 19

Figure 20

Figure 21

Figure 22

Figure 23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015048964 A1
- EP 2895891 A2
- US 2007075889 A1
- US 5557283 A
- CN 106054181 B
- WO 2018018401 A1
- CN 103197353 A
- US 2014091965 A1